(19) Europäisches Patentamt / European Patent Office / Office européen des brevets

(11) **EP 3 004 981 B1**

(12) **EUROPEAN PATENT SPECIFICATION**

(45) Date of publication and mention
of the grant of the patent:
**08.05.2024 Bulletin 2024/19**

(21) Application number: **14727169.6**

(22) Date of filing: **16.05.2014**

(51) International Patent Classification (IPC):
**G02F 1/167** *(2019.01)*  **G02F 1/1675** *(2019.01)*
**B32B 17/10** *(2006.01)*  **B60J 3/04** *(2006.01)*
**E06B 3/67** *(2006.01)*  **E06B 9/24** *(2006.01)*
**G09G 3/34** *(2006.01)*

(52) Cooperative Patent Classification (CPC):
**G02F 1/167; B32B 17/10036; B32B 17/10522;
B32B 17/10761; E06B 9/24;** E06B 2009/2464;
G02F 2001/1678; G09G 3/344

(86) International application number:
**PCT/EP2014/060074**

(87) International publication number:
**WO 2014/191232 (04.12.2014 Gazette 2014/49)**

(54) **SOLAR CONTROL DEVICE**

SOLARSTEUERUNGSVORRICHTUNG

DISPOSITIF DE CONTRÔLE SOLAIRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.05.2013 IE 20130181**

(43) Date of publication of application:
**13.04.2016 Bulletin 2016/15**

(73) Proprietor: **E Ink Corporation
Billerica, MA 01821 (US)**

(72) Inventor: **O'KEEFFE, Donal
Parteen
County Clare
Co. Clare (IE)**

(74) Representative: **Kilburn & Strode LLP
Lacon London
84 Theobalds Road
Holborn
London WC1X 8NL (GB)**

(56) References cited:
EP-A1- 1 008 564     US-A1- 2005 213 191
US-A1- 2012 188 295     US-A1- 2013 063 333
US-A1- 2013 088 768     US-B1- 6 416 868

## Description

## Field

The present invention relates to an active solar control device.

## Background of the Invention

Passive windows can reflect the sunlight infrared spectrum by using a spectrally selective coating. This coating cannot be removed from a window when the function is not required. For example, it is highly desirable to reflect the sunlight infrared spectrum when maintaining the temperature of an inside environment requires cooling, but conversely, it is highly desirable to transmit the sunlight infrared spectrum when maintaining the temperature of an inside environment requires heating.

In the prior art the available active window solutions do not provide corresponding functionality to a spectrally selective coating on a passive glazing. Prior art smart glass devices do not directly reflect the sunlight infrared spectrum; instead they absorb sunlight infrared and heat-up as a consequence. For example, liquid crystal (LC) smart glass uses dichroic dye in solution with liquid crystal to absorb sunlight infrared. Suspended particle devices (SPD) provide variable, visible sunlight transmittance but do not provide active control over sunlight infrared. There are a range of electrochromic smart glass technologies. These are not the simple light switches of other technologies; instead a reversible chemical reaction occurs when changing light states. An electrochromic smart glass provides variable, visible sunlight transmittance but substantially absorbs the sunlight infrared spectrum in all light states. Some electrophoretic devices are capable of providing a transparent light state but the prior art does not provide feasible solutions for smart glass, and prior art electrophoretic inks strongly absorb the sunlight infrared spectrum due to its charged particles using carbon black or copper chromite.

At ground level in hot climates the energy level in the three sunlight spectrums per square meter with the sun at its zenith is about 32 watts (3%) of UV, 445 watts (44%) of visible, and 527 watts (53%>) of infrared, or about 1,004 watts total. The prior art of smart glass does not describe what happens sunlight infrared energy when it is absorbed by light states.

Furthermore, the prior art of smart glass is largely silent with respect to managing the heat build-up within a device that absorbs sunlight energy. It is desirable to have an active solution - a smart glass - that manages heat build-up within a device and regulates solar heating of an inside environment.

US 2013/0088768 A1 discloses a heat resistive particle for a particle-based display. The heat resistive particle includes a near infrared absorption resistive additive mixed with a polymer resin, having a relative absorption ratio at a near infrared light wavelength range of at least less than 50% based on the maximal absorptivity at a visible light wavelength range. Specific embodiments disclosed include a display comprising black and white particles in which the black particle are heat resistive, and a display having two types of particles coloured black, cyan, blue, green, red, magenta or yellow, in which both types of particles are heat resistive.

US 2013/0063333 A1 discloses a dielectrophoretic display comprising a substrate having walls defining at least one cavity, the cavity having a viewing surface and a side wall inclined to the viewing surface; a suspending fluid contained within the cavity; a plurality of at least one type of particle suspended within the suspending fluid; and means for applying to the fluid an electric field effective to cause dielectrophoretic movement of the particles to the side wall of the cavity.

US 2005/0213191 A1 discloses various improvements in electrophoretic media and displays intended for use in light modulators. These improvements include index matching of the suspending fluid to a continuous phase surrounding the fluid, index matching of a capsule wall to a binder, planarization of a layer containing electrophoretic capsules before application of adhesive thereto, methods for concentrating electrophoretic particles into limited areas of sidewalls of electrophoretic capsules or microcells in the light-transmissive state of the display, and, in the case of light modulators comprising an electrophoretic layer sandwiched between two transparent plates, forming at least one of the plates so as to absorb electromagnetic radiation which adversely affects the electrophoretic layer.

US 2012/0188295 A1 discloses a display method for applying an electric field through an electrode to a display unit including a solution, in which particles are dispersed in the solvent, and controlling at least one of intensity, direction, application frequency, application time and application location of the electric field to control at least one of interval, location and arrangement of the particles. The display method selectively switches, within a same pixel of the display unit, between a first mode for controlling a wavelength of light reflected from the particles whose distances are controlled by controlling inter-particle distances; and a second mode for displaying at least one color of the particles, the solvent, the solution and the electrode by controlling the location of the particles.

Further background art, which can be regarded as useful for understanding the invention, includes: US 6416868 B1 and EP 1008564 A1.

## Summary of the Invention

There is provided a solar control device according to claim 1 Preferred embodiments are disclosed in the dependent claims.

In embodiments said suspending fluid substantially transmits the sunlight infrared and visible spectrums.

In some embodiments said volumes of said electrophoretic ink form a monolayer adjacent one of said electrodes on one side and are adjacent a non-planar polymer structure comprising a monolayer of close packed protrusions (i.e. polymer balls) on the opposite side, and the protrusions project into the volumes, and said charged particles move over (i.e. are deflected by) a protrusion's surface projecting into said volume in response to an applied electrical field to concentrate in the space between protrusions in said second light state.

Embodiments of the invention can be incorporated as part of the outer pane of an insulated glass unit (IGU) which has a cavity between an inner pane and the outer pane. In such embodiments, a low-emissivity coating can be provided on an inner face of the inner pane so that said device's first light state provides a SHGC of 0.22 or less, and more preferably 0.17 or less, and most preferably 0.15 or less, and said second light state provides a maximum SHGC of three times or more, and preferably four times or more, and most preferably five times or more said first light state's SHGC. An embodiment having wavelength-selective, charged particles of said second type functions as an electrically-switchable, spectrally-selective layer and provides a variable LSG ratio that in a first light state is 1.25 or more, and preferably 1.35 or more, and more preferably 1.50 or more, and most preferably 1.65 or more, and in a second light state is 0.6 or less, and preferably 0.5 or less, and more preferably 0.4 or less.

In some embodiments said electrophoretic ink further comprises a low level of charged particles (i.e. 10% or less by mass of all charged particles, and preferably 5% or less) of a type that scatters visible light (e.g., titanium dioxide) to enhance the ability of black charged particles, either said first or third types, to block visual access in said first light state.

In some embodiments said electrophoretic solar control device has film substrates and is flexible and capable of conforming to a curvature (i.e. roll) having a diameter of 300mm or more, and preferably 150mm or more.

In some film embodiments a face of said electrophoretic solar-control film has an adhesive surface (or layer) for applying said film to a rigid pane in use; preferably said adhesive is a pressure sensitive adhesive, and more preferably said pressure sensitive adhesive allows film removal using external means.

In some embodiments said electrophoretic solar control film is applied to the inner face of a glass laminate in use, said glass laminate providing industry specified safety standards or enhanced performance such as mechanical, protection, sound insulation, or decoration, and said electrophoretic film providing variable light states; and, preferably said glass laminate comprises a pair of glass panes optically bonded to each other using a PVB interlayer and an autoclave process.

In some embodiments said electrophoretic solar control film is provided in a rigid laminate comprising said electrophoretic film assembled between a pair of adhesive layers (e.g. EVA interlayers) and a pair of rigid panes, and each adhesive layer covers substantially the full surface of each pane and bonds an opposing face of said solar control film to a face of a pane, and the electrophoretic laminate is a monolith.

In embodiments that bond said electrophoretic solar control film to a single glass pane, to a face of a glass laminate, or between a pair of glass panes within a laminate, preferably said glass is prior treated to make it more resilient to thermal shock, said prior treatment using one of the following processes: heat strengthening, chemical toughening, or thermal toughening, and most preferably said treated glass is heat-soak tested to identify good panes (through a process of eliminating panes susceptible to spontaneous breakage) for bonding to said electrophoretic film.

In embodiments having the first and possibly third type of charged particles, the absorbed visible light energy in said first light state is significantly dissipated from said device's face by thermal radiation and convection, and absorbed energy dissipates from said charged particles to the face by thermal conduction and thermal radiation.

In some embodiments one of the layers (e.g., a substrate or optical adhesive layer) between said electrophoretic cell and an outside environment absorbs the sunlight ultraviolet spectrum to protect said electrophoretic cell from UV induced degradation.

In embodiments said charged particles contain colourant (i.e. pigment or dye) within their core and said colourant directly reflects a significant part of the sunlight infrared spectrum and strongly absorbs the visible spectrum,

In embodiments said colourant can be a single colourant or a mixture of colourants, and may be selected from the following: a spinel formulated primarily with nickel, manganese, chrome, and iron (i.e. C.I. Pigment Black 30), a mixture of halogenated copper phthalocyanine (i.e. C.I. Pigment Green 7) and perylenetetracarboxylic acid diimide (i.e. C.I. Pigment Violet 29), iron chromium oxide (e.g., Fe203 and Cr203 hematite), manganese iron oxide comprising an element selected from the group: magnesium, silicon, calcium, aluminium, barium or strontium carbonate, strontium manganese oxide (e.g., Sr2Mn04), doped strontium manganese oxide (e.g. doped with magnesium), calcium manganese oxide (e.g., Ca2Mn04), doped calcium manganese oxide, barium manganese oxide (e.g., Ba2Mn04), doped barium manganese oxide, manganese vanadium oxide (e.g., $Mn_2v_2O_7$), doped manganese vanadium oxide, bismuth manganese oxide (e.g., $Bi_2Mn40io$), doped bismuth manganese oxide, yttrium manganese oxide (e.g., $YMnO_3$), lanthanum manganese oxide (e.g., $LaMnO_3$), cerium manganese oxide (e.g., $CeMnO_3$), and praseodymium manganese oxide (e.g., $PrMnO_3$).

In embodiments calcium manganese oxide, strontium manganese oxide, barium manganese oxide, or their equivalent doped materials, are preferred as infrared-reflecting, black pigment for use in said charged particles.

In embodiments the following semiconductors are suitable conductive material to obtain said plasma wavelength: tin-doped indium oxide (i.e. ITO), antimony-doped tin oxide (i.e. ATO), antimony oxide doped tin oxide, lanthanum hexaboride, aluminium-doped zinc oxide, indium-doped zinc oxide, tin-doped zinc oxide, silicon-doped zinc oxide, fluorine-doped zinc oxide, gallium-doped zinc oxide, fluorine-doped tin oxide, cadmium tin oxide, tungsten oxide, tungsten oxide composite, cobalt oxide, chromium oxide, iron oxide, nickel oxide, titanium nitride, or cerium hexaboride.

In embodiments ITO, ATO and lanthanum hexaboride are preferred as infrared-reflecting conductive material for use in said charged particles, and a mixture of all three conductive materials is most preferred.

In some embodiments lanthanum hexaboride can be used in a mixture with either of ITO or ATO but this is less effective than using all three in a mixture. In said electrophoretic medium the mass of ITO and ATO conductive material used can be equal or either can be in a majority, and lanthanum hexaboride as a percentage of the combined mass of conductive material is 0.1% to 25%, more preferably 1% to 15%, and most preferably 3% to 10%.

**Brief Description of the Drawings**

Embodiments, some of which are covered by the subject-matter of the claims and some of which are not covered by the subject matter of the claims, will now be described, by way of example, with reference to the accompanying drawings, in which:

Figure 1A shows an embodiment of a solar control device 280 of the present invention and electrophoretic medium 35. Embodiments 280 and 35 can turn-on and turn-off sunlight infrared heating of an inside environment while maintaining sunlight illumination. The Figure shows a first light state that turns-off solar infrared heating.

Figure 1B shows embodiments 280 and 35 in a second light state that turns-on solar infrared heating.

Figure 2A shows an embodiment of a solar control device 281 and electrophoretic medium 37 in an insulated glass unit configured for a moderate-to-warm climate. Embodiments 281 and 37 are not covered by the subject-matter of the claims, these embodiments can turn-on and turn-off sunlight infrared heating of an inside environment in synch with turning-on and turning-off sunlight illumination. The Figure shows a first light state that turns-off solar infrared heating and sunlight illumination.

Figure 2B shows embodiments 281 and 37, which are not covered by the subject-matter of the claims, in the corresponding second light state.

Figure 3A is similar to Figure 2A except it shows embodiment 281 and electrophoretic medium 37, which are not covered by the subject-matter of the claims, in use in an electrophoretic insulated glass unit configured for a cold climate.

Figure 3B shows embodiments 281 and 37, which are not covered by the subject-matter of the claims, in the corresponding second light state.

Figure 4A shows a solar control device 216 and electrophoretic medium 32, which are not covered by the subject-matter of the claims. Film 216 and medium 32 can turn-on and turn-off sunlight illumination of an inside environment while maintaining sunlight infrared heating. The Figure shows a first light state that turns-off sunlight illumination.

Figure 4B shows film 216 and medium 32, which are not covered by the subject-matter of the claims, in a second light state that turns-on sunlight illumination.

Figure 5A shows an embodiment 283 of the present invention having an electrophoretic medium 38 that has two types of infrared-reflecting charged particles with a similar electrophoretic mobility. The Figure shows a first light state.

Figure 5B shows embodiments 283 and 38 in a second light state.

Figure 5C shows embodiments 283 and 38 in an intermediate light state of a first set of intermediate light states.

Figure 5D shows embodiments 283 and 38 in an intermediate light state of a second set of intermediate light states.

Figure 6A shows an embodiment 284 of the present invention having an electrophoretic medium 39 that has two types of infrared-reflecting charged particles with a different electrophoretic mobility. The Figure shows an example of a light state.

Figure 6B shows embodiments 284 and 39 in another light state.

Figure 7A shows an embodiment 285 of the present invention having an electrophoretic medium 40 that has two types of charged particles, infrared-reflecting 15 and infrared-transmitting 14, with a similar electrophoretic mobility. The Figure shows a first light state.

Figure 7B shows embodiments 285 and 40 in a second light state.

Figure 8A

shows an embodiment 286 of the present invention having an electrophoretic medium 41 that has two types of charged particles, infrared-reflecting 15 and infrared-transmitting 14, with a different electrophoretic mobility. The Figure shows an example of a light state.

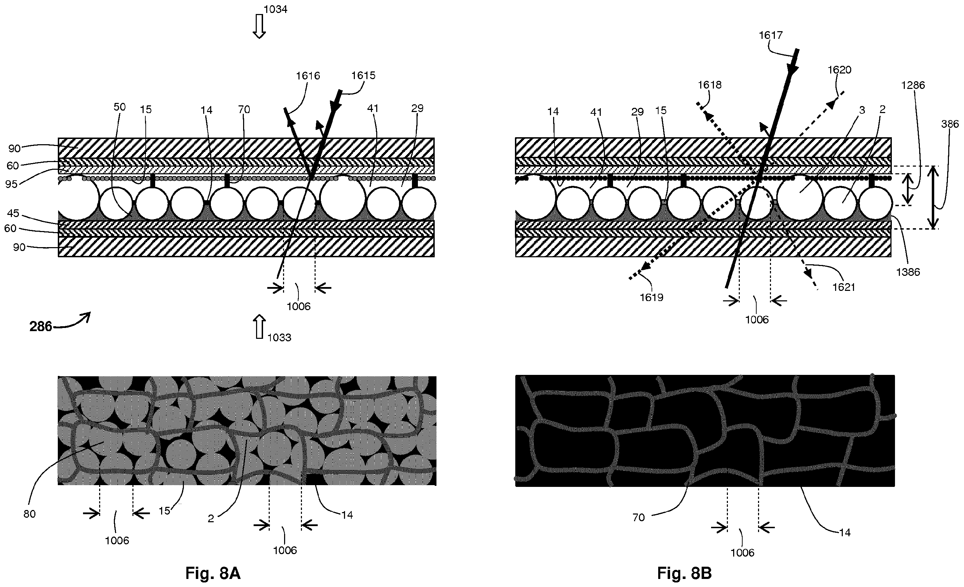

Figure 8B shows embodiments 286 and 41 in another light state.

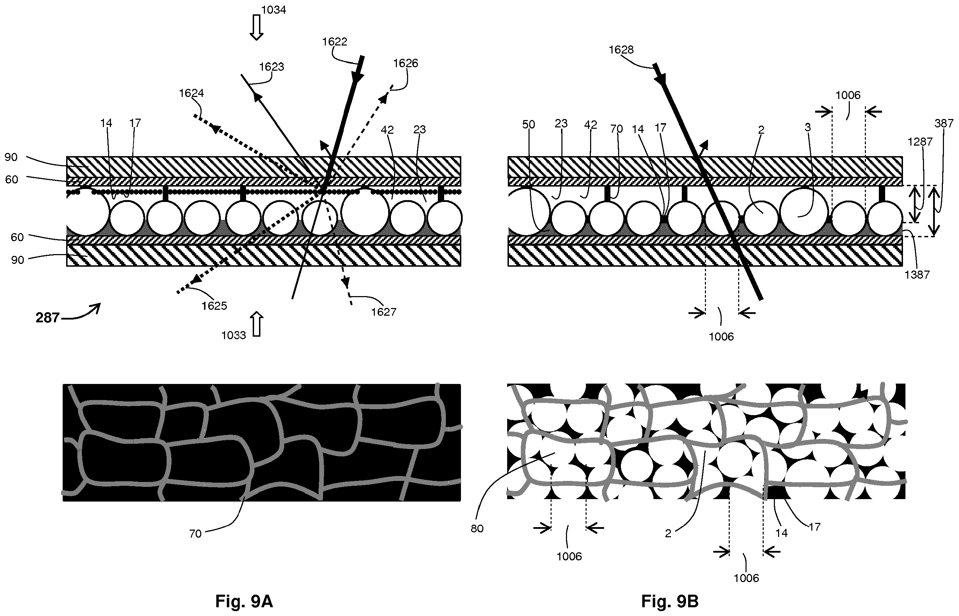

Figure 9A shows an embodiment 287, which is not covered by the subject-matter of the claims, having an electrophoretic medium 42 that has two types of charged particles, infrared-reflecting 17 and infrared-transmitting 14, with a similar electrophoretic mobility. The Figure shows a first light state.

Figure 9B shows embodiments 287 and 42, which are not covered by the subject-matter of the claims, in a second light state.

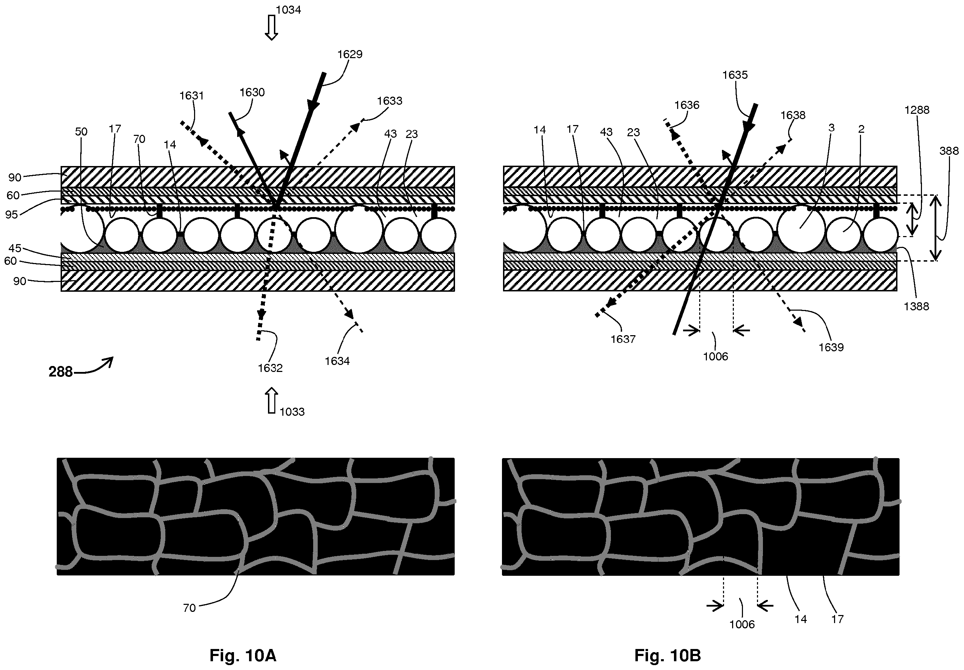

Figure 10A shows an embodiment 288, which is not covered by the subject-matter of the claims, having an electrophoretic medium 43 that has two types of charged particles, infrared-reflecting 17 and infrared-transmitting 14, with a different electrophoretic mobility. The Figure shows an example of a light state.

Figure 10B shows embodiments 288 and 43, which are not covered by the subject-matter of the claims, in another light state.

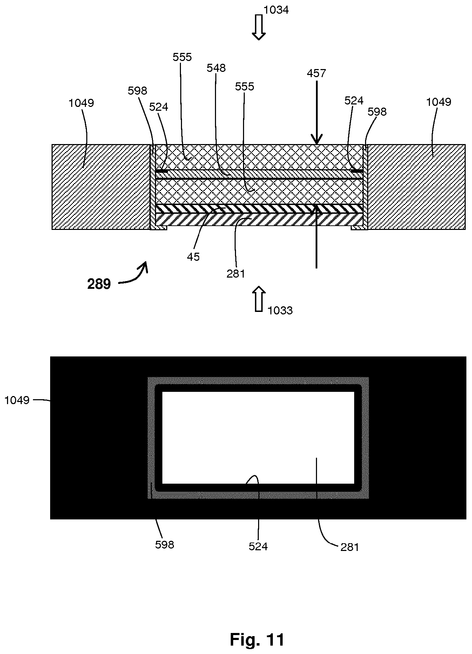

Figure 11 shows an embodiment 289, which is not covered by the subject-matter of the claims, of a sunroof for a vehicle and comprises an infrared-reflecting, electrophoretic film 281 applied to a glass laminate.

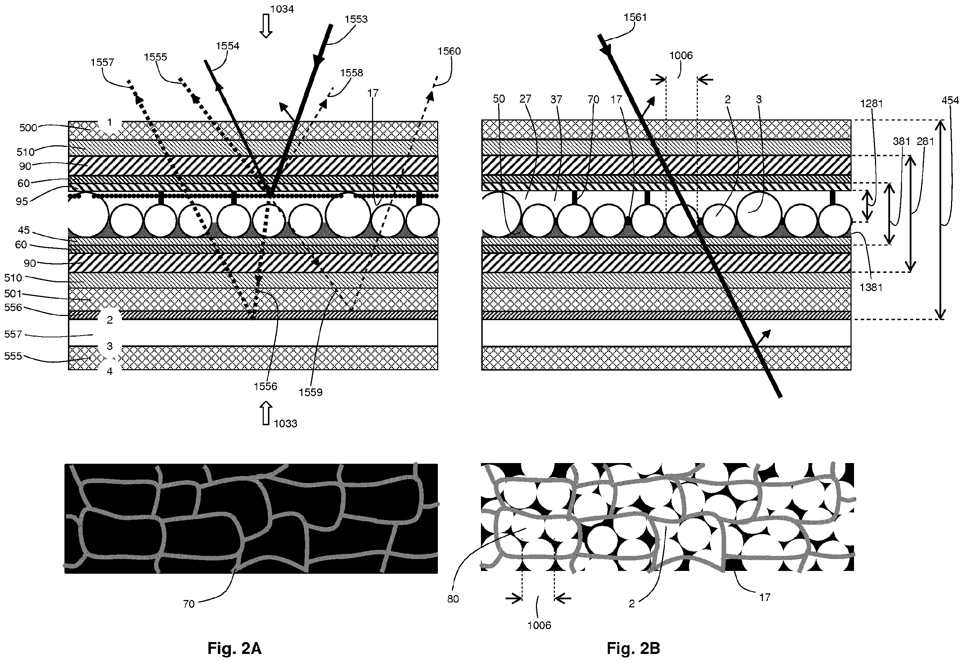

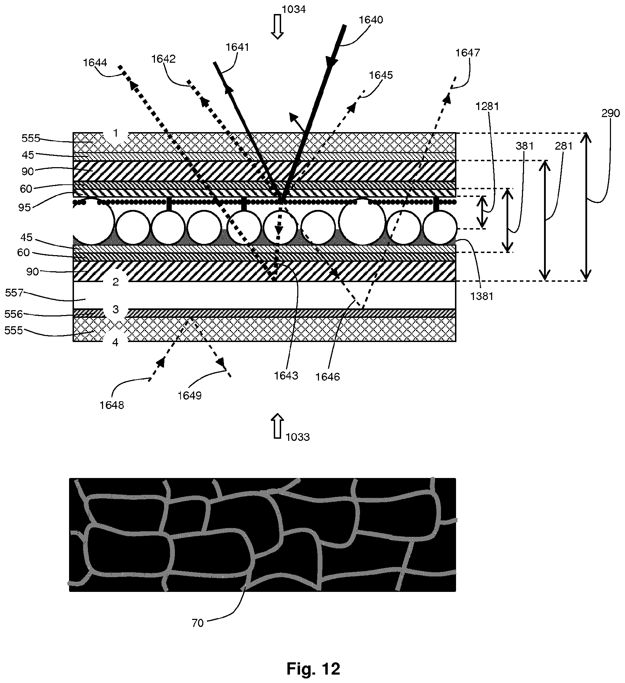

Figure 12 is similar to Figure 2A except infrared-reflecting, electrophoretic film 281 is applied to an outer glass pane of an IGU and the low-emissivity coating is on face number 3.

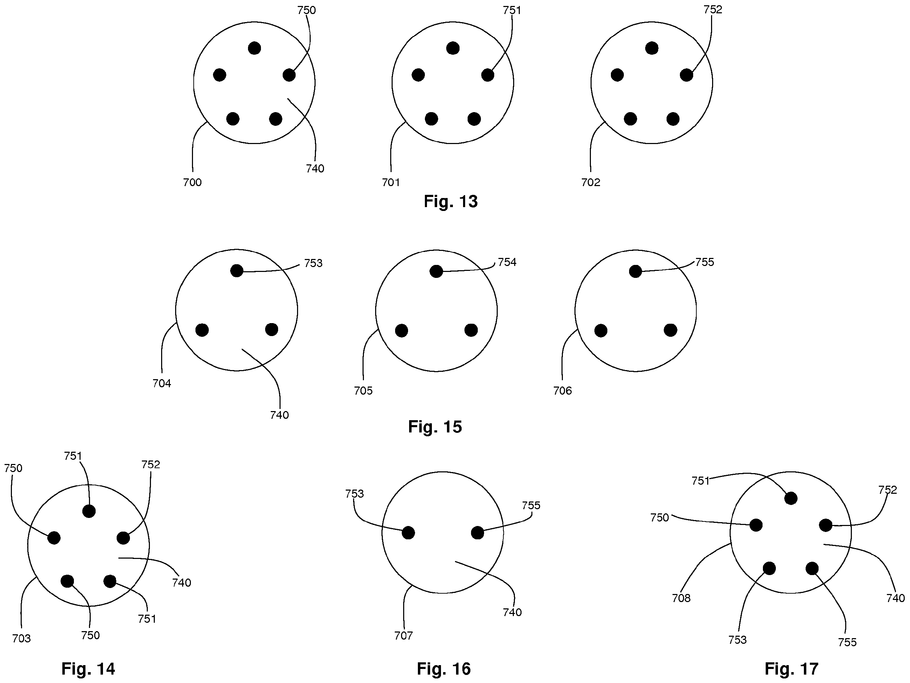

Figure 13 shows a set of wavelength-selective charged particles comprising ultra-fine, infrared-reflecting, dispersed particles of one type.

Figure 14 shows a wavelength-selective charged particle comprising mixed ultra-fine, infrared-reflecting, dispersed particle types.

Figure 15 shows a set of colour-complementary, charged particles comprising ultra-fine, dispersed pigment particles of one colour.

Figure 16 shows a colour-complementary, charged particle that has mixed ultra-fine, dispersed pigment particles.

Figure 17 shows a wavelength-selective charged particle that has a mix of ultra-fine, infrared-reflecting particles and ultra-fine, colour-complementary pigment particles.

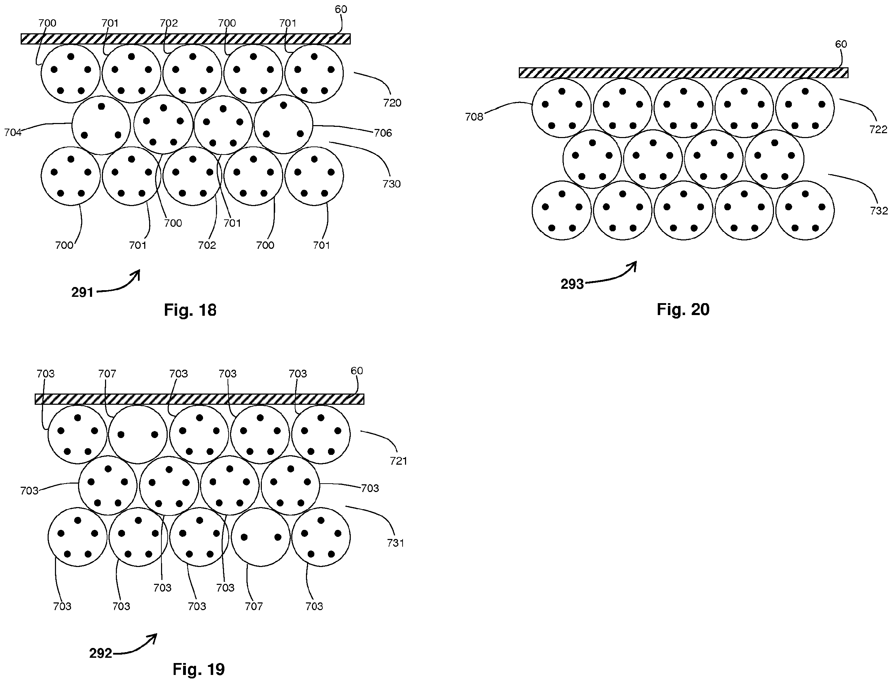

Figure 18 shows an embodiment 291 in a first light state comprising infrared-reflecting, visible-transmitting, electrophoretic ink 730 that in turn comprises charged particles from Figures 13 and 15.

Figure 19 shows an embodiment 292 in a first light state comprising infrared-reflecting, visible-transmitting, electrophoretic ink 731 that in turn comprises charged particles from Figures 14 and 16.

Figure 20 shows an embodiment 293 in a first light state comprising infrared-reflecting, visible-transmitting, electrophoretic ink 732 that in turn comprises charged particles from Figure 17.

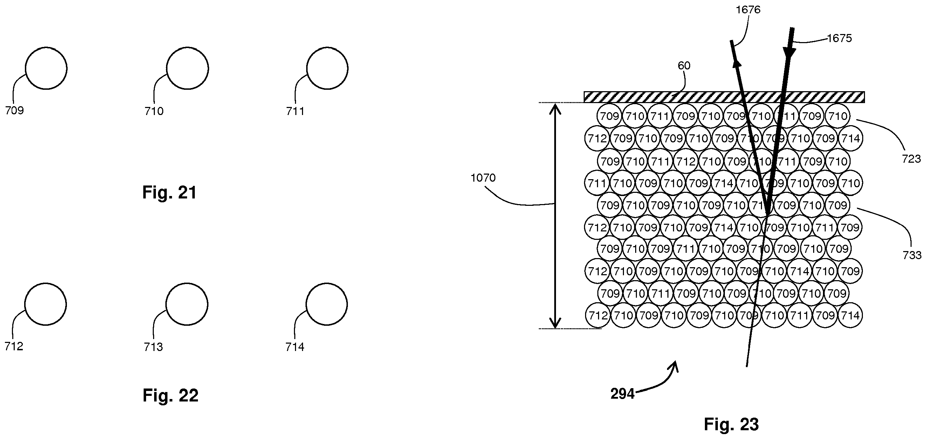

Figure 21 shows a set of ultra-fine, wavelength-selective, charged particles.

Figure 22 shows a set of ultra-fine, colour-complementary, charged pigment particles.

Figure 23 shows an embodiment 294 in a first light state comprising infrared-reflecting, visible-transmitting, electrophoretic ink 733 that in turn comprises ultra-fine, charged particles from Figures 21 and 22.

## Detailed Description

Passive glazing can directly reflect the sunlight infrared spectrum by using a spectrally selective coating and consequently does not heat-up appreciably when rejecting sunlight infrared. The present invention provides an active solution - a solar control device - that selectively rejects the sunlight infrared spectrum by directly reflecting it. In embodiments a solar control device directly reflects sunlight infrared to an outside environment using an electrophoretic device that has infrared-reflecting, electrophoretic ink and provides variable sunlight infrared-reflectance using its light states. As a consequence of using infrared-reflecting electrophoretic ink, solar energy is not significantly absorbed when rejecting the sunlight infrared spectrum and embodiments do not heat-up appreciably.

The Figures show embodiments some of which are covered by the subject-matter of the claims and some of which are not covered by the subject matter of the claims as marked. Embodiments comprise first and second electrodes that can be supported or carried on first and second substrates. The electrodes are parallel and spaced apart, and the space between the electrodes comprises an electrophoretic cell that contains an infrared-reflecting electrophoretic ink or medium. The electrophoretic ink uses wavelength-selective charged particles to reflect part of the sunlight spectrum and the particles substantially restrict reflection to the sunlight infrared spectrum and substantially transmit the sunlight visible spectrum. The electrophoretic ink can have charged particles of more than one type. In embodiments one or more types of charged particles directly reflect solar energy by selectively reflecting the sunlight infrared spectrum to an outside environment.

The wavelength-selective charged particles respond to an electric field applied to the electrodes of the solar control device to move through the ink's suspending fluid and form the light states. In a first extreme light state the charged particles are maximally spread within the electrophoretic cell to lie in the path of sunlight through the cell and to substantially reflect the sunlight infrared spectrum falling on the cell. In a second extreme light state the charged particles are maximally concentrated within the cell to remove them from the path of sunlight through the cell and to substantially transmit the sunlight infrared spectrum through the cell. And, in one or more intermediate light states the charged particles may move to variable positions between the first and second light states to partially reflect the sunlight infrared spectrum. Embodiments reject the sunlight infrared spectrum with a low level of absorption and consequential heat. The electrophoretic cell has at least one light state transparent to visible light to provide visual access.

The wavelength-selective charged particles 15 as claimed in claim 1 substantially transmit the visible spectrum and reflect the infrared spectrum. This particle type 15 is called a second type herein and embodiments comprising solely this particle type appear optically clear or translucent. Embodiments provide visual access in all light states. These embodiments can turn-off and turn-on solar infrared heating of an inside environment (by selectively reflecting the sunlight infrared spectrum) while maintaining sunlight illumination (by transmitting the visible spectrum). And, using the intermediate light states embodiments can provide weather-adaptable solar infrared heating of an inside environment while maintaining sunlight illumination. These embodiments decouple the sunlight infrared spectrum from the visible spectrum to provide control over solar infrared heating of an inside environment independent of sunlight illumination.

In some embodiments, in addition to the wavelength-selective charged particles 15 of the second type, the electrophoretic medium may contain wavelength-selective charged particles 17 which strongly absorb the sunlight visible spectrum and reflect the infrared spectrum. This particle type 17 is called a first type herein. This particle type can appear black in a first light state and tinted black in intermediate light states. These embodiments can turn-off and turn-on solar infrared heating of an inside environment (by selectively reflecting the sunlight infrared spectrum) in synch with turning-off and turning-on sunlight illumination (by selectively absorbing the sunlight visible spectrum). And, using the intermediate light states embodiments can vary solar infrared heating and sunlight illumination in synch.

In some embodiments, in addition to the wavelength-selective charged particles 15 of the second type, the electrophoretic medium may contain a third type of wavelength-selective charged particle 14 which strongly absorbs the sunlight visible spectrum and transmits the infrared spectrum. This third particle type mixed with the second type enhances the range of functionality of solar control embodiments as described later. This third particle type can appear black in a first light state and tinted black in intermediate light states. Such devices can turn-off and turn-on sunlight illumination of an inside environment (by selectively absorbing the sunlight visible spectrum) while maintaining solar infrared heating (by transmitting the sunlight infrared spectrum). And, using the intermediate light states devices can vary sunlight illumination while maintaining solar infrared heating. These embodiments decouple the sunlight visible spectrum from the infrared spectrum to provide control over sunlight illumination of an inside environment independent of solar infrared heating.

In embodiments having a mixture of charged particle types the polarity of the particle types is preferably the same and can be either positive or negative. In some embodiments the mean electrophoretic mobility of each charged particle type is similar to provide common light states with the sunlight interaction determined by the combined functionality and relative fraction (by mass) of each particle type for the sunlight infrared and visible spectrums. In alternative embodiments the mean electrophoretic mobility of each type can be significantly different and the range of mobility for each type sufficiently narrow to provide independent light states for each charged particle type.

Embodiments use a mixture of wavelength-selective charged particle types to enhance adaptability for an operating climate. Mixtures include one of the following:

    a) a mixture including the first and second charged particle types, or
    b) a mixture including the second and third charged particle types.

Embodiments of the electrophoretic solar control device include use as a sunlight attenuator, a sunlight shutter, a sunlight modulator, a variable sunlight transmittance sheet, a variable sunlight rejection sheet, a variable sunlight reflectance sheet, or a sunlight glare-avoidance device.

The electrophoretic devices and electrophoretic cells shown in the Figures have an inherent transparent light state and the devices, methods of construction, and methods of operating are described in EP 3 396 446 B. It will be appreciated that any electrophoretic cell that has one or more transparent light states can equally be used as a substitute for the electrophoretic cells herein once the infrared-reflecting electrophoretic ink and methods described herein are applied.

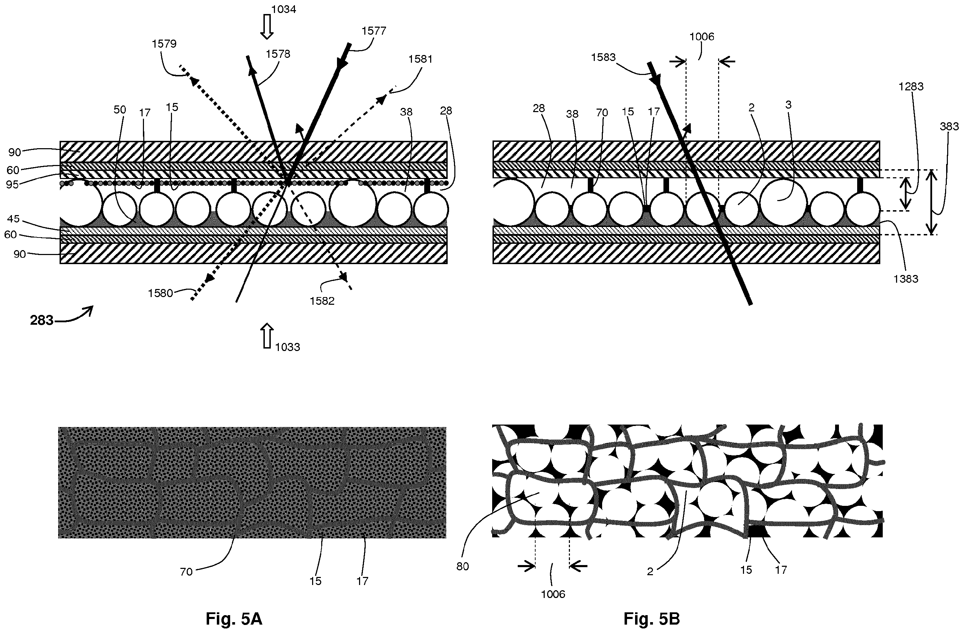

In many of the Figures that follow embodiments are shown in two views: one view shows a cross section, and the other view is of a face of an embodiment and can be a front or rear face unless otherwise indicated. Cross sectional views represent a diagonal cross section of the face view unless otherwise indicated. In addition, a Figure having a letter denominator represents an embodiment in a specific light state and each letter denominated Figure (for a given number) is of the same embodiment, just different light states. For example, Figures 5A to 5D are of the same embodiment 283 in different light states. Embodiments shown in insulated glass units (IGUs) have their faces numbered as shown in Figure 2A by assigning face number 1 to the planar surface exposed to the outside environment 1034, face number 2 to the planar surface exposed to sealed cavity 557 and closest to the outside environment, face number 3 to the opposite planar surface exposed to the sealed cavity 557, and face number 4 to the planar surface exposed to the inside environment 1033.

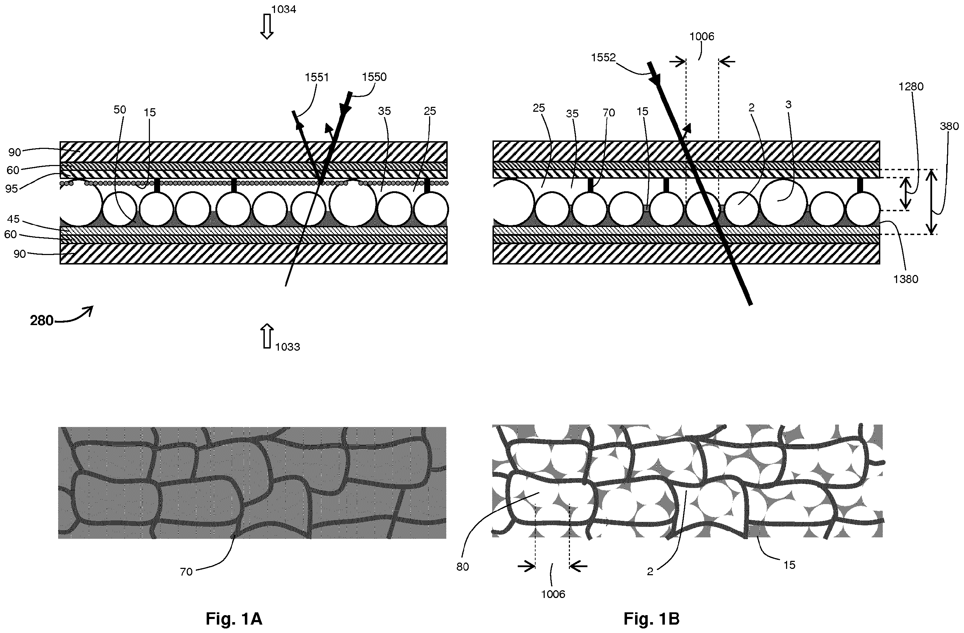

Figure 1A shows an embodiment 280 of an electrophoretic film device that has an infrared-reflecting electrophoretic ink 35 (also called electrophoretic medium 35) in an electrophoretic cell 380. The latter is indicated by an arrow in Figure 1B and includes all of the elements sandwiched between the top and bottom electrodes 60. Ink 35 has wavelength-selective charged particles 15 that are substantially transparent to visible light and referred to herein as a second type. Particles 15 are dispersed in a transparent suspending fluid 25. To minimize and avoid haze in light states the refractive index of transparent polymer elements within electrophoretic cell 380 (including polymer walls 70, space-filling polymer 50, and polymer balls 2 and 3) are matched (e.g., within 0.002 of each other) to the suspending fluid 25.

In the face views of Figures 1A and 1B wavelength-selective charged particles 15 are shown as grey to differentiate them in the Figures from areas void of particles 15. In Figure 1A the face view is shown as uniformly grey with particles 15 masking areas corresponding to polymer balls 2 and 3, whereas in Figure 1B particles 15 are voided from the areas corresponding to the polymer balls. It will be appreciated that as particles 15 are substantially transparent to visible light there is negligible apparent difference for visible light between the two light states shown in Figures 1A and 1B and particles 15 are not grey in practice.

Figure 1A shows embodiment 280 in the first light state and represents a maximum spreading or distribution of charged particles 15 in a plane adjacent the top electrode 60. Negatively charged particles 15 (charged particles are preferably all positive or all negative) move within suspending fluid 25 in response to an electrical field until they are near uniformly spread planar with the top electrode 60 and lie in the path of sunlight through the cell 380. The electrical field is applied between electrodes 60 by a controller (not shown) that establishes a positive potential (in the case of negatively charged particles 15) between the top (i.e. adjacent insulating layer 95) and bottom (i.e. adjacent optical clear adhesive 45) electrodes 60. A suitable controller and signals for operating electrophoretic film 280 are described in the aforementioned EP 3 396 446 B. In the first light state charged particles 15 cover a face of embodiment 280, the incident sunlight infrared spectrum is strongly reflected by particles 15 and the sunlight visible spectrum is transmitted, and film 280 has negligible haze and is see-through.

Figure 1B shows embodiment 280 in the second light state and represents a maximum concentrating or collecting of wavelength-selective charged particles 15 upon the surface of non-planar structure 1380. Negatively charged particles 15 move within suspending fluid 25 in response to an electrical field until they are concentrated in the space between polymer balls 2 and 3 (i.e. the volume defined by the surfaces there between) to remove them from the path of sunlight through cell 380. The electrical field is applied between electrodes 60 and establishes a negative potential (in the case of negatively charged particles 15) between the top and bottom electrodes 60. Each polymer ball 2 or 3 defines an aperture 1006 that is substantially free of particles 15 and consequently is transparent to the sunlight infrared spectrum. Sunlight in the visible and infrared spectrums incident on embodiment 280 is transmitted through an aperture 1006 defined by a polymer ball 2 and exits the cell 380 substantially free of attenuation or light scattering.

Using the second type of charged particles (i.e. particles 15) the solar control device can turn-off (see Figure 1A) and turn-on (see Figure 1B) solar infrared heating of an inside environment while maintaining sunlight illumination (i.e. maintaining transparency to visible light) by using the first and second light states respectively. The capability to turn-on and turn-off solar heating in this way provides the means to adapt solar heating of an inside environment for different seasons and weather conditions. By contrast a conventional passive window with a spectrally selective coating cannot adapt solar heating to the seasons or weather changes and always reflects the sunlight infrared spectrum despite the need for solar heating in winter and during cold weather.

Polymer balls 2 can be microspheres, hemispheres or protrusions and account for > 90% of balls, and polymer balls 3 can be monodisperse and act as cell-gap spacers by establishing the thickness of the cell 380. Polymer balls 3 also ensure that electrophoretic ink 35 is free to surround or engulf polymer balls 2 in the electrophoretic ink layer 1280 and that particles 15 can spread over polymer balls 2 unobstructed in the first light state. Polymer balls 2 and 3 project into the electrophoretic ink 35 's volume and partially fill electrophoretic layer 1280 that otherwise indicates the volume filled with electrophoretic ink 35. The polymer structure 1380 indicates a non-planar structure optionally bonded to an optical-clear-adhesive (OCA) 45 and adjacent the bottom electrode 60 within cell 380. It comprises polymer 50 and polymer balls 2 and 3. Polymer 50 fills the space between polymer balls 2 and 3 approximately up to an equator plane. In embodiment 280 polymer balls 2 and 3 are arranged tightly in a monolayer and are described as having close packing. The face view of Figure 1B shows polymer balls 2 having random close packing.

In embodiments the substrates 90 can be rigid (e.g., glass) or flexible. Any suitable transparent polymer sheet material such as PET (i.e. polyethylene terephthalate), PEN (i.e. polyethylene napthalate), PES (i.e. polyether sulfone), PC (i.e. polycarbonate), PI (i.e. polyimide), or FRP (i.e. fiber reinforced plastic) can be used for flexible substrates. Furthermore, thin flexible glass with a thickness of 30 to 150 microns can also be used for substrates 90 such as available from Nippon Electric Glass Co. Ltd in 50 microns or 100 microns roll formats. Preferably embodiments have film substrates and are flexible and capable of conforming to a curvature (i.e. roll) having a diameter of 300mm or more, and preferably 150mm or more. In some embodiments the substrate, a separate adhesive layer, or a separate filter layer, between the electrophoretic cell 280 and an outside environment 1034 absorbs the sunlight ultraviolet spectrum to protect the electrophoretic cell from UV induced degradation.

Unless otherwise described the electrodes 60 are any suitable transparent conductor. For example, ITO (i.e. indium tin oxide), FTO (i.e. fluorine tin oxide), IZO (i.e. indium zinc oxide), carbon nanotubes, silver nanowires, or a conductive polymer such as PEDOT (i.e. poly(ethylenedioxythiophene). Silver nanowires or PEDOT can be printed or coated as a conductive ink onto a substrate or onto the electrophoretic cell. A top electrode 60 can be one type such as ITO and a bottom electrode 60 another type such as silver nanowires. Colourneutral, transparent electrodes are preferred for embodiments that require high optical quality such as electrodes that have an anti-reflection coating to minimize visible light reflection (e.g., the Flexvue range ITO electrodes from Solutia). Electrodes 60 substantially transmit the sunlight infrared spectrum, and preferably at least partially transmit thermal radiation.

Insulating layer 95 is optional and is used to prevent electrical contact between an electrophoretic ink 35 and an electrode 60. But, depending on how the walls 70 of cavities 80 are formed the cavity forming process can form a thin polymer wall 70 adjacent top electrode 60 making insulating layer 95 redundant.

Polymer walls 70 define cavities 80 (see Figure 1B) that divides electrophoretic ink 35 into discrete or semi discrete volumes or regions within electrophoretic cell 380. The cross sectional views show walls 70 as predominantly vertical and extending from the surface of polymer balls 2 and 3 to top electrode 60. The polymer walls 70 can be formed by a polymer induced phase separation process (known as PIPS in the prior art).

In Figure 1A sunlight ray 1550 has its infrared spectrum substantially reflected by charged particles 15 as shown by reflected infrared ray 1551 and its visible spectrum transmitted to an inside environment 1033 in a first light state. The solar energy in its infrared spectrum is rejected to an outside environment 1034 by reflection without significant absorption. Because embodiment 280 does not significantly absorb sunlight energy in its light states it does not heat-up appreciably (can be near negligible), and the operating temperature of electrophoretic cell 380 in use exposed to intense sunlight remains close to the contacting environments' temperature (i.e. the environment each face of a device is exposed to). Figure 1B shows the second light state of embodiment 280. Sunlight ray 1552 has its visible and infrared spectrums substantially transmitted by aperture 1006 (defined approximately by the diameter of polymer balls 2) to an inside environment 1033.

Wavelength-selective charged particles that substantially transmit visible sunlight (i.e. particles 15) provide unhindered sunlight illumination of an inside environment while its light states provide varied reflectance of the sunlight infrared spectrum to actively manage solar heating of an inside environment directly reflecting the sunlight infrared spectrum in warm weather (to minimize solar heating) and transmitting it in cold weather (to maximize solar heating). Embodiments have a functionality corresponding to an active, spectrally-selective coating and can be described with solar expressions associated with glazing and defined in standards EN 400:201 or ISO 9050-03 for example. The solar heat gain coefficient (SHGC) is minimized in a first light state by reflecting sunlight infrared and maximized in a second light state by transmitting sunlight infrared. Embodiment 280 provides a variable LSG ratio (i.e. (visible transmittance) / (SHGC)) that in a first light state is 1.25 or more, and preferably 1.35 or more, and more preferably 1.50 or more, and most preferably 1.65 or more, and in a second light state is 0.6 or less, and preferably 0.5 or less, and more preferably 0.4 or less.

In Figures 2A and 2B film embodiment 281, which is not covered by the subject matter of the claims, is incorporated into an electrophoretic laminate 454 that in turn forms the outer pane in an electrophoretic insulated glass unit (IGU). EP 3 004 505 B describes glazing that incorporates electrophoretic film devices. The electrophoretic insulated glass unit is configured for a moderate-to-warm climate. Face number 1 is in contact with an outside environment 1034. The inner face of laminate 454 forms face number 2 and has a low-emissivity coating 556. The latter is in contact with sealed gas cavity 557. Glass pane 555 is in contact with an inside environment 1033. In arrangements a low-emissivity coating 556 is transparent to visible light, substantially transparent to sunlight infrared, and reflects thermal radiation (i.e. longwave infrared). Electrophoretic glass laminate 454 comprises embodiment 281 assembled between a pair of optically-clear adhesive layers 510 (known as interlayers) and a pair of glass panes 500 and 501. Each adhesive layer 510 covers substantially the full surface of each pane and bonds an opposing face of electrophoretic film 281 to a face of a pane. Adhesive layers 510 absorb 99% or more of the sunlight ultraviolet spectrum to protect electrophoretic cell 381 from UV induced degradation. The resulting electrophoretic laminate 454 is a monolith.

Embodiment 281 has electrophoretic ink 37 (also called electrophoretic medium 37) that has charged particles 17 that substantially reflect the sunlight infrared spectrum and absorb the visible spectrum. Particles 17 are referred to herein as a first type and are suspended in transparent fluid 27 (see earlier description of fluid 25). Electrophoretic film 281 is otherwise similar to the earlier described film 280: its electrophoretic cell is 381, its electrophoretic ink layer is 1281, and its non-planar structure is 1381. Use of charged particles 17 that strongly absorb visible sunlight about halves the heat build-up and temperature rise of the face of an electrophoretic laminate 454 when exposed to intense sunlight when compared to known black charged particles. The latter strongly absorb sunlight infrared as well as visible light, and examples include carbon black, or copper chromite (i.e. $CuCr_2O_4$), or synthetic iron oxide (i.e. $Fe_3O_4$ magnetite) charged particles.

Charged particles 17 are black and an ink containing solely this first charged particle type (at a sufficient loading) provides device 281 with a first light state that has a black appearance and intermediate light states that have a black tinted appearance. In arrangements the first light state directly reflects 33% or more of the sunlight infrared spectrum, and more preferably 50% or more, and most preferably 65% or more. Advantageously, charged particles 17 diffusely reflect sunlight infrared and consequently the electrophoretic cell 381 diffusely reflects sunlight infrared in a first light state. This contrasts with the mirror-like (i.e. specular) reflection of infrared by a glazing's spectrally selective coating. The diffuse reflection of sunlight infrared by arrangements avoids the risk of glazing walls acting as giant mirrors focusing sunlight infrared onto local spots in its surroundings.

In arrangements the sunlight energy absorbed by wavelength-selective charged particles is diffused as increased thermal radiation and heat conduction so that absorbed sunlight energy spontaneously flows from charged particles to an arrangement's face in contact with an environment. This situation persists while there is a positive temperature gradient between the charged particles of an electrophoretic ink and an arrangement's face in contact with an environment. The face then diffuses or transfers this solar energy to the contacting environment by convection and thermal radiation.

In arrangements having the first type of charged particles (i.e. particles 17) the first and second light states can turn-off (see Figure 2A) and turn-on (see Figure 2B) solar infrared heating of an inside environment (by selectively reflecting the sunlight infrared spectrum) in synch with turning-off and turning-on sunlight illumination (by selectively absorbing the sunlight visible spectrum). And, using the intermediate light states arrangements can vary solar infrared heating and sunlight illumination in synch.

Figure 2A shows a first light state. Sunlight ray 1553 is incident on face number 1 of the IGU. Electrophoretic device 281 absorbs the visible and directly reflects the infrared spectrum of ray 1553 using the wavelength-selective charged particles 17 of its electrophoretic ink 37 (the reflected infrared is shown as ray 1554); the conducted heat diffusing from particles 17 (from absorbed visible sunlight) flows to face number 1 as represented by ray 1555 and flows to face number 2 as represented by ray 1556; cavity 557 blocks heat ray 1556 causing the conducted heat to flow to face number 1 as represented by ray 1557; the thermal radiation emitted by particles 17 (from absorbed visible sunlight) flows to face number 1 as represented by ray 1558 and flows to face number 2 as represented by ray 1559; low-emissivity coating 556 reflects ray 1559 causing the thermal radiation to flow to face number 1 as represented by ray 1560; and, face number 1 of the IGU returns the energy in ray 1553 absorbed by particles 17 (i.e. the visible spectrum) to an outside environment 1034 by thermal radiation and air convection (not shown) from its surface. In this way the solar energy in the sunlight visible spectrum is indirectly rejected to an outside environment 1034 and the energy in the sunlight infrared spectrum is directly rejected by the electrophoretic cell 381.

Figure 2B shows the second light state of the electrophoretic IGU. Sunlight ray 1561 has its visible and infrared spectrums substantially transmitted by an aperture 1006 (defined by a polymer ball 2) to an inside environment 1033 to maximize solar heating. The IGU embodiment shown in Figures 2A and 2B avoids solar heating (i.e. near negligible SHGC) of an inside environment in a first light state, provides varying levels of solar heating in intermediate light states, and maximizes solar heating in a second light state. The first light state provides a SHGC of 0.22 or less, and more preferably 0.17 or less, and most preferably 0.15 or less, and the second light state provides a maximum SHGC of three times or more, and preferably four times or more, and most preferably five times or more the first light state's SHGC.

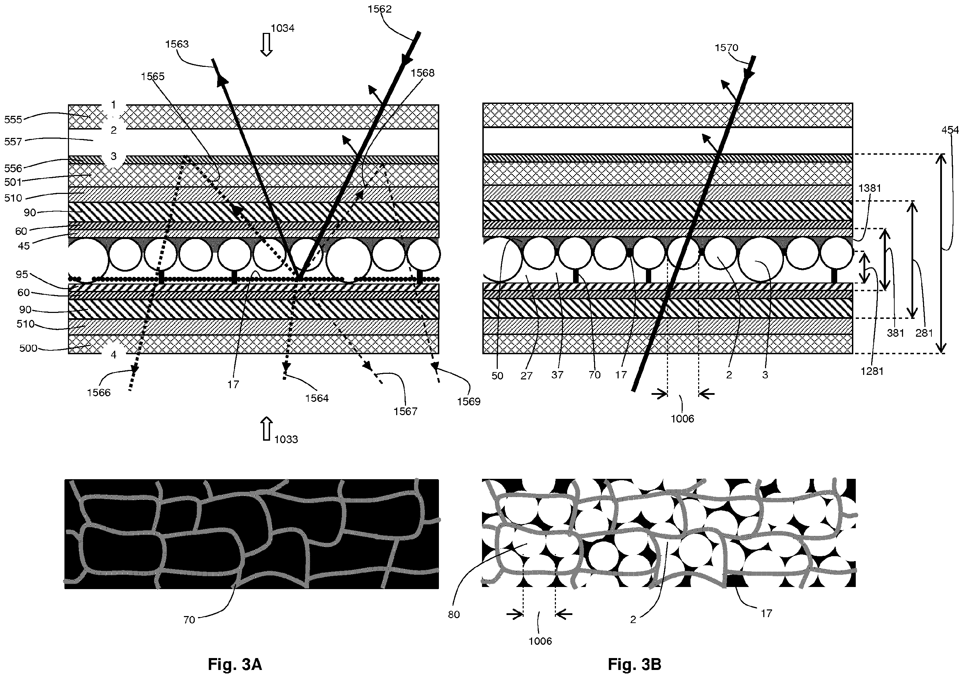

Figures 3A and 3B also show embodiment 281, which is not covered by the subject-matter of the claims, in an IGU similar to Figures 2A and 2B except these Figures show a cold climate configuration: a face of the electrophoretic glass laminate 454 is in contact with an inside environment 1033 and sunlight energy absorbed by the electrophoretic laminate is substantially directed to the inside environment 1033. Figure 3A shows embodiment 281 in a first light state. Sunlight ray 1562 has its visible spectrum absorbed and its infrared spectrum reflected to an outside environment (see reflected infrared ray 1563), separately, the absorbed energy (i.e. the visible spectrum) of ray 1562 is directed to an inside environment 1033 from face 4: see conducted heat rays 1564, 1565 and 1566, and thermal radiation rays 1567, 1568 and 1569. Figure 3B shows embodiment 281 in a second light state. Sunlight ray 1570 has its visible and infrared spectrums transmitted within an aperture 1006 similar to that described earlier for Figure 2B. The IGU embodiment shown in Figures 3A and 3B halves or more the solar heating of an inside environment by reflecting the sunlight infrared spectrum in a first light state, provides varying levels of solar heating in intermediate light states, and maximizes solar heating in a second light state.

Absorbed visible sunlight energy (by wavelength-selective charged particles that strongly absorb the visible spectrum) can subject glass panes bonded to an electrophoretic film (e.g., panes 500 and 501) to significant thermal shocks, and it has been found that in such arrangements the panes need to be resilient to thermal stress.

Preferably a glass pane that is bonded to such electrophoretic films are treated to make them more resilient to thermal shock using one of the following processes: heat strengthening (e.g., as per EN 1863-1), chemical toughening (e.g., as per EN 12337-1), or thermal toughening (e.g., as per EN 12150-1). But any of these three processes, while improving resilience to the thermal shock, can still leave a low level of glass panes liable to spontaneous breakage. In preferred arrangements a risk of spontaneous breakage due to thermal stress can be greatly reduced or eliminated by subjecting glass that was already treated to be heat-strengthened, chemically-toughened, or thermally-toughened, to a heat soak test or treatment (e.g., as per EN 14179-1) that through a process of elimination identifies good panes for bonding to an electrophoretic film. A heat soak test or treatment consists of placing prior treated glass panes in a furnace at a defined temperature and for a defined duration in order to promote and accelerate the breakage of susceptible panes. It will be appreciated that the earlier described electrophoretic film 280 does not significantly absorb solar energy in its light states and glass panes bonded to this electrophoretic film are not subject to significant thermal shock by an embodiment.

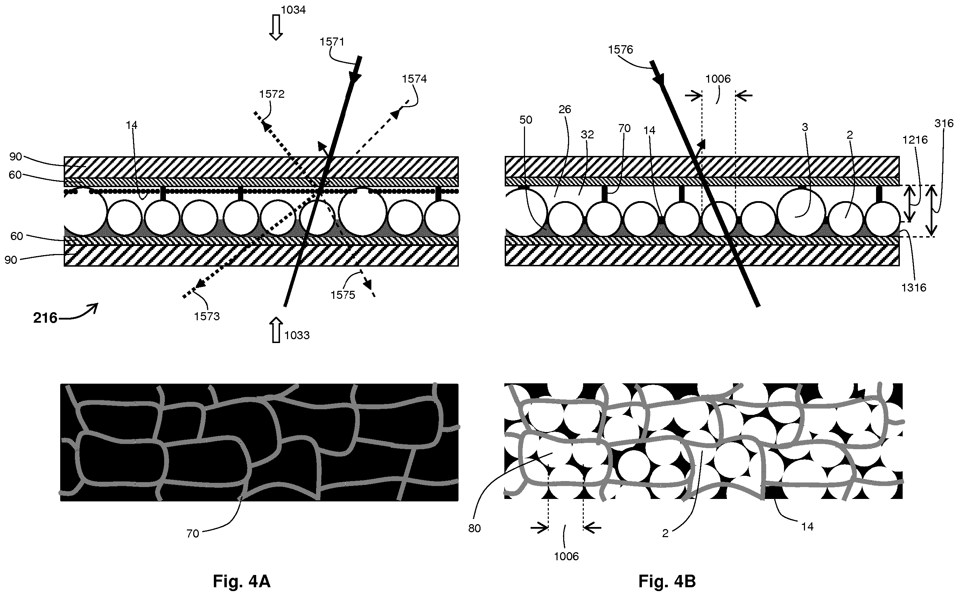

Figure 4A shows a solar control device 216 that has an electrophoretic ink 32 (also called electrophoretic medium 32) comprising charged particles 14 that substantially transmit the sunlight infrared spectrum (i.e. are transparent to sunlight infrared) and absorb the visible spectrum. Particles 14 are referred to herein as a third type and are suspended in transparent fluid 26 (see earlier description of fluid 25). Electrophoretic film 216 has similar elements to film 280: its electrophoretic cell is 316, its electrophoretic ink layer is 1216, and its non-planar structure is 1316. Similar to charged particles 17 (i.e. the first type) use of wavelength-selective charged particles 14 about halves the heat build-up and temperature rise of an electrophoretic film's face when exposed to intense sunlight when compared to known black charged particles (i.e. those that strongly absorb sunlight infrared as well as visible light).

Wavelength-selective charged particles 14 are black and an ink containing solely this third charged particle type (at a sufficient loading) provides device 216 with a first light state that has a black appearance and intermediate light states that have a black tinted appearance. The first light state of electrophoretic cell 316 directly transmits 50% or more of the sunlight infrared spectrum, and more preferably 60% or more, and most preferably 65% or more.

In devices having the third type of charged particles (i.e. particles 14) the first and second light states can turn-off (see Figure 4A) and turn-on (see Figure 4B) sunlight illumination of an inside environment (by selectively absorbing the sunlight visible spectrum) while maintaining solar infrared heating (by transmitting the sunlight infrared spectrum). And, using the intermediate light states devices can vary sunlight illumination while maintaining solar infrared heating.

In Figure 4A sunlight ray 1571 is incident on electrophoretic film 216; in a first light state wavelength-selective charged particles 14 absorb the visible and transmit the infrared spectrums of ray 1571 to an inside environment 1033; the conducted heat from particles 14 (from absorbed visible sunlight) flows to the outside environment 1034 as represented by ray 1572 and flows to the inside environment 1033 as represented by ray 1573; the thermal radiation emitted by particles 14 (from absorbed visible sunlight) flows to the outside environment as represented by ray 1574 and flows to the inside environment as represented by ray 1575. Both faces of electrophoretic film 216 diffuse conducted energy in ray 1571 absorbed by particles 14 to their respective contacting environments by air convection and thermal radiation (not shown).

Figure 4B shows the second light state of electrophoretic film 216. Incident sunlight ray 1576 has its visible and infrared spectrums substantially transmitted to an inside environment 1033 through an aperture 1006. Electrophoretic film 216 maintains sunlight infrared transmittance in all light states to provide solar heating of an inside environment and uses its first light state to deny visual access and provide privacy, and intermediate light states to provide variable, visible light transmittance to minimize or avoid glare from the sun. In an alternative use electrophoretic film 216 can be arranged adjacent a spectrally selective layer that reflects the sunlight infrared spectrum and charged particles 14 reemit this spectrum to an outside environment to minimize solar heating of an inside environment in all light states. In both uses described for film 216 control of the sunlight infrared spectrum is passive and cannot be electrically switched unlike embodiments 280 and 281 described earlier or solar control device embodiments described in following Figures.

Figures 1-4 illustrate described solar control devices comprising solely one of three types of charged particles. In the following Figures solar control embodiments comprising a mixture of charged particle types are described, and these embodiments show enhanced functionality and adaptability. Devices can comprise mixtures of charged particle types and include one of the following:

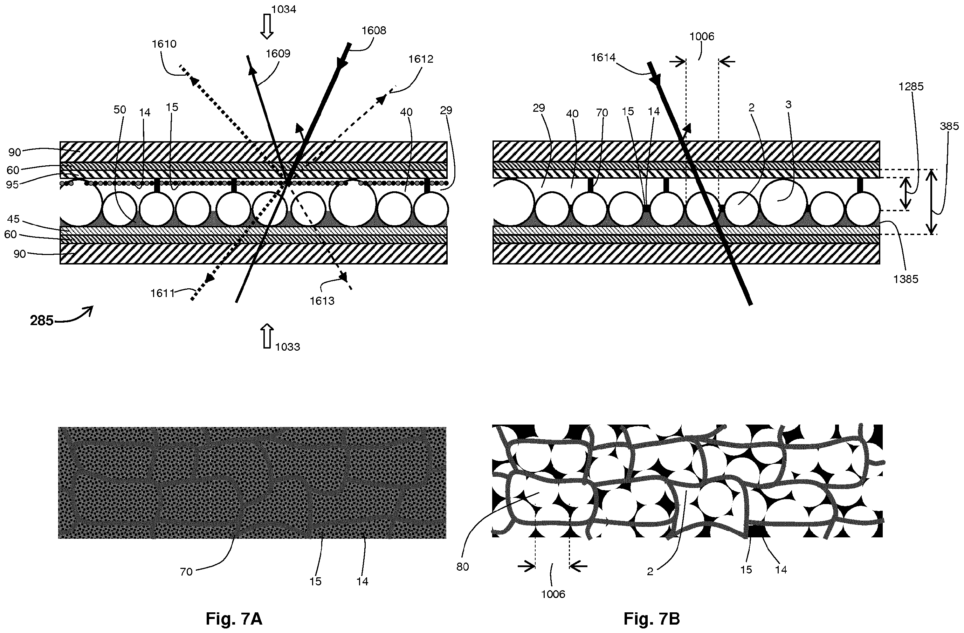

a) a mixture including the first and second charged particle types and described in Figures 5A to 6B;
b) a mixture including the second and third charged particle types and described in Figures 7A to 8B; or
c) a mixture including the first and third charged particle types and described in Figures 9A to 10B (not an embodiment of the present invention).

Embodiment 283 shown in Figures 5A to 5C has optical properties intermediate that of films 280 (solely particles 15) and 281 (solely particles 17) as a consequence of using a mixture of charged particles 15 and 17. In a first light state (shown in Figure 5A) visible sunlight is partially transmitted to provide visual access and partially absorbed to reduce sunlight glare and reject (indirectly) some of the solar energy in the sunlight visible spectrum. Electrophoretic film 283 is otherwise similar to the earlier described films 280 and 281: its electrophoretic cell is 383, its electrophoretic ink layer is 1283, and its non-planar structure is 1383.

Electrophoretic ink 38 (also called electrophoretic medium 38) comprises two types of charged particles: particles 17, a first type, strongly absorb visible sunlight and reflect sunlight infrared, and particles 15, a second type, substantially transmit visible sunlight and reflect sunlight infrared. Both charged particle types have the same polarity and are suspended in suspending fluid 28. In embodiment 283 particles 15 and 17 have similar electrophoretic mobility and move evenly through suspending fluid 28 in response to an electrical field. Particles 15 and 17 mix sufficiently in light states to provide uniform light characteristics.

In electrophoretic ink 38, as the fraction (by mass) of the second type (i.e. particles 15) increases, the visible sunlight transmittance in a first light state increases yet the reflectance of the sunlight infrared spectrum remains near constant as both particle types substantially reflect sunlight infrared. Embodiments comprising the first and second charged particle types (i.e. 15 and 17) are typically see-through in all light states with a first light state providing a minimum light transmittance that still permits visual access while intermediate light states provide variable visible light transmittance and variable sunlight infrared reflectance.

In Figure 5A sunlight ray 1577 has its infrared spectrum substantially reflected in a first light state by both charged particles 15 and 17 as shown by reflected infrared ray 1578. Its visible spectrum is partially transmitted to an inside environment 1033 and partially absorbed in proportion to the ratio of the charged particle types. The solar energy in its infrared spectrum is rejected to an outside environment 1034 by direct reflection without significant absorption. The solar energy in the partially absorbed visible spectrum is diffusely conducted from particles 17 and flows to the outside environment 1034 as represented by ray 1579 and flows to the inside environment 1033 as represented by ray 1580; and, the thermal radiation emitted by particles 17 (from absorbed visible sunlight) flows to the outside environment 1034 as represented by ray 1581 and flows to the inside environment as represented by ray 1582. Absorbed solar energy (from the partially absorbed visible sunlight) thermally radiates and convects from both faces of device 283. The fraction of thermal radiation from each face is in proportion to the temperature difference between a face and air in the contacting environment, and the fraction of convection from each face is also in proportion to the temperature difference as well as the air velocity in the contacting environment. As it is the respective temperature differences that determine how the heat caused by absorbed sunlight (i.e. solar energy) is distributed between an inside and outside environment a monolithic embodiment such as 283 (or film 283 bonded to one or two glass panes) is less efficient than when employed in an IGU as described earlier in relation to Figure 2A.

To the extent that embodiment 283 does not significantly absorb sunlight energy in its light states it does not heat-up appreciably (can be near negligible), and the operating temperature of electrophoretic cell 383 in use exposed to intense sunlight can remain close to the contacting environment's temperature. Figure 5B shows the second light state of embodiment 283. Sunlight ray 1583 has its visible and infrared spectrums substantially transmitted by aperture 1006 to an inside environment 1033. Embodiment 283 provides solar control performance intermediate embodiments 280 and 281, and significantly reduces solar heating of an inside environment in a first light state, provides varying levels of solar heating in intermediate light states, and maximizes solar heating in a second light state.

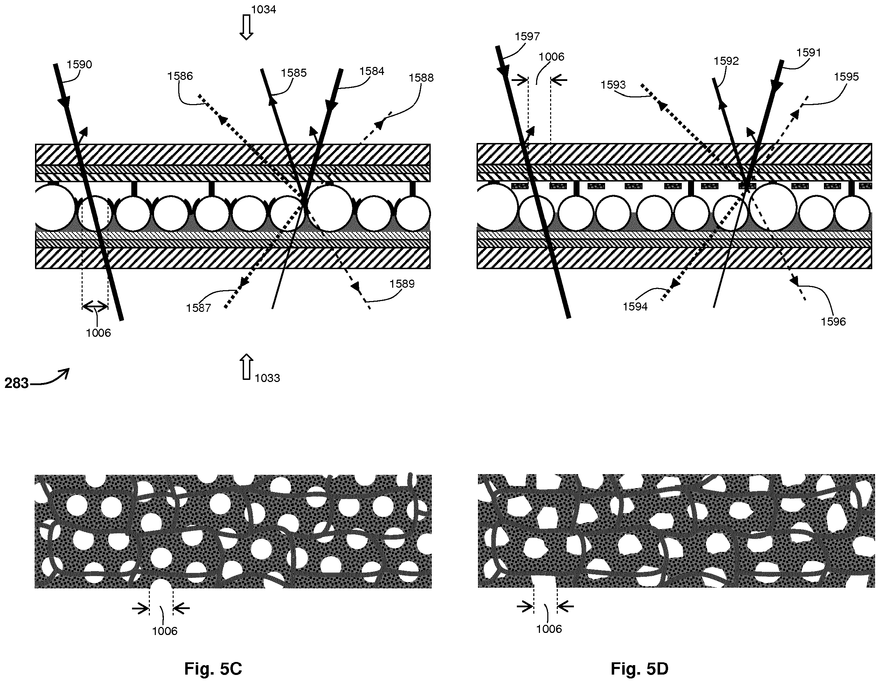

Figure 5C shows an intermediate light state in a first set of intermediate light states for embodiment 283. Wavelength-selective charged particles 15 and 17 are partially concentrated by protrusions 2 (i.e. the hemispheres of polymer balls 2) and define apertures 1006 that have a smaller diameter than in the second light state shown in Figure 5B. Sunlight ray 1584 is incident outside apertures 1006 and has its sunlight visible spectrum partially absorbed by concentrated particles 17 and its sunlight infrared spectrum directly reflected (see reflected ray 1585), whereas sunlight ray 1590 has its visible and infrared spectrums substantially transmitted within apertures 1006. The absorbed solar energy (i.e. part of the visible spectrum) of ray 1584 is directed to both an outside environment and an inside environment: see conducted heat rays 1586 and 1587, and thermal radiation rays 1588 and 1589. Intermediate light states provide embodiment 283 with a variable, black tinted appearance.

Figure 5D is similar to Figure 5C except it shows an intermediate light state in a second set of intermediate light states. Charged particles 15 and 17 are partially concentrated by protrusions 2 and then moved to adjacent a top electrode 60 where they define apertures 1006. Sunlight ray 1591 is incident outside apertures 1006 and has its sunlight visible spectrum partially absorbed by concentrated particles 17 and its sunlight infrared spectrum directly reflected (see reflected ray 1592), whereas sunlight ray 1597 has its visible and infrared spectrums substantially transmitted within apertures 1006. The absorbed energy of ray 1591 is directed to both an outside environment and an inside environment: see conducted heat rays 1593 and 1594, and thermal radiation rays 1595 and 1596.

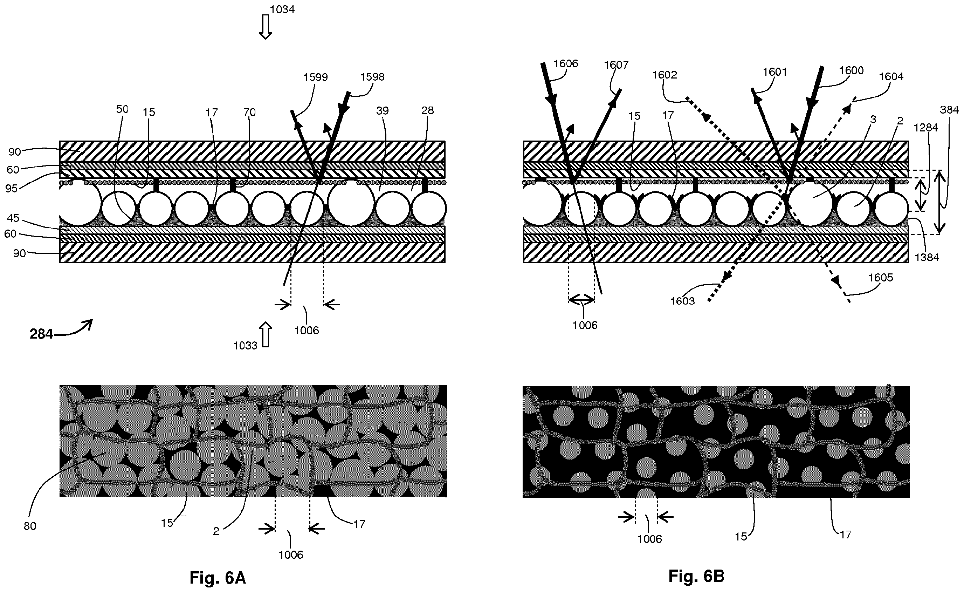

Figures 6A and 6B show an embodiment 284 having an electrophoretic ink 39 (or electrophoretic medium 39) that also comprises charged particles 17, a first type, and particles 15, a second type, except in embodiment 284 particles 15 and 17 have significantly different electrophoretic mobility to provide the means to select light states for each particle type largely independent of the other. In this embodiment the mean electrophoretic mobility of each charged particle type is significantly different and the range of mobility of each type is sufficiently narrow to provide independent light states for each type that are addressable with an electrical field. For example, E Ink's US 8,441,714 describes an electrophoretic display having differently coloured charged particles (e.g. red, green and blue) with different electrophoretic mobility to allow independent addressing of each colour of charged particle (i.e. each type). As an example, wavelength-selective charged particles 15 can have a zeta potential (related to electrophoretic mobility) of 100mV and charged particles 17 can have a zeta potential of 33mV. In this example particles 15 are faster moving due to their higher zeta potential and so particles 17 are addressed to form their required light state (particles 15 will also change to this light state momentarily) immediately followed by the addressing of particles 15 to form their light state (particles 17 are too slow or below threshold to follow).

Embodiments comprising first and second charged particle types (i.e. 15 and 17) that are independently addressable provide similar functionality to either particle type on its own. Figures 1A and 1B showed the functionality provided by particles 15 and Figures 2 A and 2B showed the functionality of particles 17. In embodiment 284 either functionality can be selected or both can be selected in concurrent light states. Electrophoretic film 284 is otherwise similar to the earlier described films 280 and 281 : its electrophoretic cell is 384, its electrophoretic ink layer is 1284, and its non-planar structure is 1384.

In Figure 6A wavelength-selective charged particles 15 are in a first light state and charged particles 17 are in a second light state. The resulting sunlight transmission profile is predominately determined by particles 15 as particles 17 are in the concentrated state. Sunlight ray 1598 has its infrared spectrum substantially reflected in a first light state by charged particles 15 as shown by reflected infrared ray 1599, and its visible spectrum is transmitted to an inside environment 1033 by an aperture 1006. The solar energy in its infrared spectrum is rejected to an outside environment 1034 by direct reflection without significant absorption.

Figure 6B shows an example of where the different concurrent light states for each particle type in embodiment 284 contributes to the resulting sunlight transmission. Charged particles 15 are in a first light state and reflect the sunlight infrared spectrum while charged particles 17 are in an intermediate light state to reduce visible light transmission and consequently sunlight glare. Sunlight ray 1600 has its infrared spectrum reflected by particles 15 (see reflected infrared ray 1601) and its transmitted visible spectrum is incident on particles 17 in the intermediate light state. Particles 17 absorb the remaining light in ray 1600. The absorbed solar energy (i.e. the visible spectrum) of ray 1600 is directed to both an outside environment and an inside environment: see conducted heat rays 1602 and 1603, and thermal radiation rays 1604 and 1605. The intermediate light state for particles 17 provides embodiment 284 with a black tinted appearance. Sunlight ray 1606 has its infrared spectrum reflected by particles 15 (see reflected infrared ray 1607) and its transmitted visible spectrum is substantially transmitted by aperture 1006 to an inside environment 1033.

In embodiment 284 the second charged particle type (i.e. particles 15) can selectively switch the sunlight infrared spectrum to adapt solar heating of an inside environment for hot or cold weather, and the first charged particle type (i.e. particles 17) can selectively switch sunlight to adapt the sunlight illumination of an inside environment for the time of the day, comfortable sunlight illumination level, or glare avoidance.

Embodiment 285 shown in Figures 7A and 7B has optical properties intermediate that of films 280 (solely particles 15) and 216 (solely particles 14) as a consequence of using a mixture of charged particles 15 and 14. It is similar to the earlier described film 283 (Figure 5A) except its black charged particles 14 transmit the sunlight infrared spectrum instead of reflecting it. In a first light state (shown in Figure 7A) visible sunlight is partially transmitted by particles 15 to provide a reduced level of sunlight illumination of an inside environment and sunlight infrared is partially transmitted by particles 14 to provide a reduced level of solar heating. Electrophoretic film 285 is otherwise similar to the earlier described films 280 and 216: its electrophoretic cell is 385, its electrophoretic ink layer is 1285, and its non-planar structure is 1385.

Electrophoretic ink 40 (also called electrophoretic medium 40) comprises two types of charged particles: particles 15, a second type, substantially transmit visible sunlight and reflect sunlight infrared and particles 14, a third type, strongly absorb visible sunlight and transmit sunlight infrared. Both charged particle types have the same polarity and are suspended in suspending fluid 29. In embodiment 285 particles 15 and 14 have similar electrophoretic mobility and move evenly through suspending fluid 29 in response to an electrical field. Particles 15 and 14 mix sufficiently in light states to provide uniform light characteristics.

In electrophoretic ink 40, as the fraction (by mass) of the second type (i.e. particles 15) increases, the transmittance of the sunlight visible spectrum and reflectance of the sunlight infrared spectrum increases in a first light state. Embodiments comprising the second and third charged particle types (i.e. 15 and 14) are typically see-through in all light states with a first light state providing a minimum light transmittance that still permits visual access while intermediate light states provide variable visible light transmittance and variable sunlight infrared-reflectance.

Figure 7A shows a first light state of embodiment 285. Sunlight ray 1608 has its infrared spectrum partially reflected to an outside environment 1034 as shown by ray 1609 and partially transmitted to an inside environment 1033 (i.e. reflected by particles 15 and transmitted by particles 14). Its visible spectrum is partially transmitted to an inside environment 1033 and partially absorbed in proportion to the ratio of the charged particle types (i.e. transmitted by particles 15 and absorbed by particles 14). The absorbed solar energy (i.e. the visible spectrum) of ray 1608 is directed to both an outside environment and an inside environment: see conducted heat rays 1610 and 1611, and thermal radiation rays 1612 and 1613.

To the extent that embodiment 285 does not significantly absorb sunlight energy in its light states it does not heat-up appreciably (can be near negligible), and the operating temperature of electrophoretic cell 385 in use exposed to intense sunlight can remain close to the contacting environment's temperature. Figure 7B shows the second light state of embodiment 285. Sunlight ray 1614 has its visible and infrared spectrums substantially transmitted by aperture 1006 to an inside environment 1033.

Figures 8A and 8B show an embodiment 286 having an electrophoretic ink 41 (or electrophoretic medium 41) that also comprises charged particles 15, a second type, and particles 14, a third type, except in embodiment 286 particles 15 and 14 have significantly different electrophoretic mobility to provide the means to select light states for each particle type largely independent of the other. Charged particles having different electrophoretic mobility were described earlier in relation to embodiment 284 (see Figures 6A and 6B).

Embodiments comprising second and third charged particle types (i.e. 15 and 14) that are independently addressable provide similar functionality to either particle type on its own. Figures 1A and 1B showed the functionality provided by particles 15 and Figures 4A and 4B showed the functionality of particles 14. In embodiment 286 either functionality can be selected or both can be selected in concurrent light states (e.g., one particle type in a first light state and the other type in an intermediate light state). Electrophoretic film 286 is otherwise similar to the earlier described films 280 and 216: its electrophoretic cell is 386, its electrophoretic ink layer is 1286, and its non-planar structure is 1386.

In Figure 8A wavelength-selective charged particles 15 are in a first light state and charged particles 14 are in a second light state. The resulting sunlight transmission profile is predominately determined by particles 15 as particles 14 are in the collected light state. Sunlight ray 1615 has its infrared spectrum substantially reflected in a first light state by charged particles 15 as shown by ray 1616. Its visible spectrum is transmitted to an inside environment 1033 by an aperture 1006. The solar energy in its infrared spectrum is rejected to an outside environment 1034 by direct reflection without significant absorption. The first light state for particles 15 provides embodiment 286 with a clear or transparent appearance.

In Figure 8B charged particles 14 are in a first light state and wavelength-selective charged particles 15 are in a second light state. The resulting sunlight transmission profile is predominately determined by particles 14 as particles 15 are in the collected light state. Sunlight ray 1617 has its visible spectrum substantially absorbed in a first light state by charged particles 14. Its infrared spectrum is transmitted to an inside environment 1033 by an aperture 1006. The absorbed solar energy (i.e. the visible spectrum) of ray 1617 is directed to both an outside environment and an inside environment: see conducted heat rays 1618 and 1619, and thermal radiation rays 1620 and 1621. The first light state for particles 14 provides embodiment 286 with a black appearance.

In embodiment 286 the second charged particle type (i.e. particles 15) can selectively switch the sunlight infrared spectrum to adapt solar heating of an inside environment for hot or cold weather, and the third charged particle type (i.e. particles 14) can selectively switch the sunlight visible spectrum to adapt the sunlight illumination of an inside environment for the time of the day, comfortable sunlight illumination level, or glare avoidance. In embodiment 286 the sunlight transmission profiles of the second charged particle type complements that of the third charged particle type as each transmits the rejected spectrum of the other. Particles 15 are restricted to rejecting sunlight infrared (by reflection) and transmit the visible spectrum whereas particles 14 are restricted to rejecting the visible spectrum (by absorption) and transmit the sunlight infrared spectrum.

Embodiment 287 which is not covered by the subject-matter of the claims, shown in Figures 9A and 9B has optical properties intermediate that of films 281 (solely particles 17) and 216 (solely particles 14) as a consequence of using a mixture of charged particles 17 and 14. In a first light state (shown in Figure 9A) visible sunlight is strongly absorbed by both particle types and sunlight infrared is partially transmitted by particles 14 to provide a reduced level of solar heating. Electrophoretic film 287 is otherwise similar to the earlier described films 281 and 216: its electrophoretic cell is 387, its electrophoretic ink layer is 1287, and its non-planar structure is 1387.

Electrophoretic ink 42 (also called electrophoretic medium 42) comprises two types of charged particles: particles 17, a first type, substantially absorb visible sunlight and reflect sunlight infrared and particles 14, a third type, strongly absorb visible sunlight and transmit sunlight infrared. Both charged particle types have the same polarity and are suspended in suspending fluid 23. In embodiment 287 particles 17 and 14 have similar electrophoretic mobility and move evenly through suspending fluid 23 in response to an electrical field. Particles 17 and 14 mix sufficiently in light states to provide uniform light characteristics. In arrangements as electrophoretic ink 42 increases the fraction (by mass) of the first type (i.e. particles 17) the reflectance of the sunlight infrared spectrum increases in a first light state, but the sunlight visible absorpance remains near constant.

Figure 9A shows a first light state of embodiment 287. Sunlight ray 1622 has its infrared spectrum partially reflected to an outside environment 1034 as shown by ray 1623 and partially transmitted to an inside environment 1033 (i.e. reflected by particles 17 and transmitted by particles 14). Its visible spectrum is strongly absorbed. The absorbed solar energy (i.e. the visible spectrum) of ray 1622 is directed to both an outside environment and an inside environment: see conducted heat rays 1624 and 1625, and thermal radiation rays 1626 and 1627.

To the extent that embodiment 287 does not significantly absorb sunlight energy in its light states it does not heat-up appreciably (can be near negligible), and the operating temperature of electrophoretic cell 387 in use exposed to intense sunlight can remain close to the contacting environment's temperature. Figure 9B shows the second light state of embodiment 287. Sunlight ray 1628 has its visible and infrared spectrums substantially transmitted by aperture 1006 to an inside environment 1033.

Figures 10A and 10B show an embodiment 288, which is not covered by the subject-matter of the claims, having an electrophoretic ink 43 (or electrophoretic medium 43) that also comprises charged particles 17, a first type, and particles 14, a third type, except in embodiment 288 particles 17 and 14 have significantly different electrophoretic mobility to provide the means to select light states for each particle type largely independent of the other. Charged particles having different electrophoretic mobility were described earlier in relation to embodiment 284 (see Figures 6A and 6B).

Arrangements comprising first and third charged particle types (i.e. 17 and 14) that are independently addressable provide similar functionality to either particle type on its own. Figures 2A and 2B showed the functionality provided by particles 17 and Figures 4A and 4B showed the functionality of particles 14. In embodiment 288, which is not covered by the subject-matter of the claims, 8 either functionality can be selected or both can be selected in concurrent light states (e.g., one particle type in a first light state and the other type in an intermediate light state). Electrophoretic film 288 is otherwise similar to the earlier described films 281 and 216: its electrophoretic cell is 388, its electrophoretic ink layer is 1288, and its non-planar structure is 1388.

In Figure 10A wavelength-selective charged particles 17 are in a first light state and wavelength-selective charged particles 14 are in a second light state. The resulting sunlight transmission profile is determined by particles 17 as particles 14 are in the collected light state. Sunlight ray 1629 has its visible spectrum strongly absorbed and its infrared spectrum substantially reflected (see reflected infrared ray 1630) in a first light state by charged particles 17. The solar energy in its infrared spectrum is rejected to an outside environment 1034 by direct reflection without significant absorption. The absorbed solar energy (i.e. the visible spectrum) of ray 1629 is directed to both an outside environment and an inside environment: see conducted heat rays 1631 and 1632, and thermal radiation rays 1633 and 1634. The first light state for particles 17 provides embodiment 288 with a black appearance.

In Figure 10B charged particles 14 are in a first light state and charged particles 17 are in a second light state. The resulting sunlight transmission profile is predominately determined by particles 14 as particles 17 are in the concentrated light state. Sunlight ray 1635 has its visible spectrum substantially absorbed in a first light state by charged particles 14, and its infrared spectrum is transmitted to an inside environment 1033 by an aperture 1006. The absorbed solar energy (i.e. the visible spectrum) of ray 1635 is directed to both an outside environment and an inside environment: see conducted heat rays 1636 and 1637, and thermal radiation rays 1638 and 1639. The first light state for particles 14 also provides embodiment 288 with a black appearance.

In embodiment 288 a solar control device can be operated in two modes. In one mode the first charged particle type is operated in intermediate light states to vary solar heating (i.e. reflects sunlight infrared) in sync with varying sunlight illumination of an inside environment in moderate to warm weather, and the third charged particle type remains in the second light state. In the other mode the third charged particle type provides solar heating (i.e. transmits sunlight infrared) in cold weather while it is operated in intermediate light states to vary sunlight illumination, and the first charged particle type remains in the second light state.

In arrangements described so far the solar control device has preferably film substrates for incorporation into electrophoretic laminates comprising the electrophoretic film laminated to a pair of adhesive layers (e.g. EVA interlayers) and a pair of float glass panes (e.g., see laminate 454 in Figures 2A to 3B). In use a solar control device as described herein can be applied as a film (i.e. an electrophoretic composite) to a prior assembled glass laminate using an optical clear adhesive layer. This is shown in Figure 11. A suitable adhesive type for applying an electrophoretic film arrangement to a glass surface includes a pressure sensitive adhesive and a suitable technique includes laminating between a pair of NIP rollers. Preferably the adhesive is in the form of a layer (protected with a release liner until used), and preferably the adhesive is reworkable or provides the ability to be removed using external means such as a suitable solvent. If not already provided the adhesive layer 45 can incorporate an ultraviolet (UV) filtering function and in use filters 99% or more of the sunlight ultraviolet spectrum to shield the applied electrophoretic film. Suitable adhesive 45 can be loaded with UV absorbing nanoparticles that have negligible visible and infrared absorption. UV filtering OCA films are available commercially. In a similar alternative use an electrophoretic film arrangement is applied to a single rigid pane (either glass or polymer) using an adhesive layer; this latter arrangement is shown in Figure 12. It will be appreciated that one or both substrates of an arrangement can be rigid and have sufficient strength to be used directly in an application without securing to a supporting (or carrier) pane or rigid sheet.

Figure 11 shows a vehicle sunroof embodiment 289, which is not covered by the subject-matter of the claims, comprising electrophoretic film 281 (described earlier in relation to Figures 2A to 3B) bonded with an optical clear adhesive layer 45 to glass laminate 457. A particular advantage of embodiment 289 over electrophoretic glass laminate 454 (see Figure 2B) is that the glass laminate 457 is prior assembled and optimized to provide industry specified safety standards or enhanced performance such as mechanical, penetration protection, thermal stress resistance, sound insulation, or added decorative effects, and the electrophoretic film 281 is optimized for variable control of solar reflectance. Preferably glass laminate 457 comprises a pair of glass panes 555 optically bonded to each other using a PVB interlayer 548 and an autoclave process. This is the industry standard glass lamination process and it cannot be used when an electrophoretic film is included within the glass lamination process; a lower processing temperature, an EVA interlayer, and a vacuum bag process is typical for electrophoretic glass laminates 454 (see Figure 2B).

In Figure 11 embodiment 289 occupies an opening in a vehicle's roof 1049 and its electrophoretic film 281 is shown in a second light state. An optional frame 598 supports the glass laminate 457 and optional masking element 524 (e.g. enamel or paint) hides edge areas of film 281 and together these elements can create a seamless appearance from outside a vehicle. The PVB interlayer 548 filters 99% or more of the sunlight ultraviolet spectrum to shield film 281.

In Figure 12 embodiment 281 is applied to a rigid pane 555 (e.g. glass or polymer) using an optical clear adhesive layer to form electrophoretic laminate 290. The electrophoretic laminate 290 is the outer pane of an insulated glass unit similar to the earlier described Figure 2A expect a face of electrophoretic film 281 is in contact with sealed cavity 557, and low-emissivity coating 556 is on face number 3. Embodiment 281 is in a first light state in Figure 12. Sunlight ray 1640 has its visible spectrum absorbed and its infrared spectrum reflected to an outside environment (see reflected infrared ray 1641) by wavelength-selective particles 17, separately, the absorbed energy (i.e. the visible spectrum) of ray 1640 is directed to an outside environment 1034 from face 1 : see conducted heat rays 1642, 1643 and 1644, and thermal radiation rays 1645, 1646 and 1647. Thermal radiation from inside environment 1033 is reflected by coating 556; see thermal radiation rays 1648 and 1649.

In the following sections, electrophoretic mediums (also called electrophoretic inks) and wavelength-selective charged particles are described for use in the solar control device arrangements herein. Mediums or inks containing wavelength-selective charged particles 17 (a first type: infrared-reflecting and visible absorbing) are described first, then mediums containing wavelength-selective charged particles 15 (a second type: infrared-reflecting and visible transmitting), and then mediums including wavelength-selective charged particles 14 (a third type: infrared-transmitting and visible absorbing).

The prior art describes useful suspending fluids, charge agents, and additive components for electrophoretic inks for display devices. Aspects of these can be adapted for use in the embodiments described in the current invention. For example, copper-chromite, black, charged particles are described in E Ink's US Patent 7,002,728 and copper-iron-manganese-oxide-spinel, black, charged particles are described in E Ink's WO 2010/091398. Both of these charged particle materials strongly absorb the entire sunlight spectrum and consequently are not suited to the embodiments described herein. Merck's WO/2011/154104 describes white charged particles. The preparation of black, white and coloured charged particles, and suspending fluids and additives are described in Xerox's US 7,417,787. Further examples of materials, additives, suspending fluids, and charged particle preparation techniques are available in Sipix' US7,951,938 or Sony's US2011/0310465.

In following sections wavelength-selective materials for use in charged particles are described. Suitable wavelength-selective materials are available from suppliers in fine powder form and can be ground to a selected size (e.g., 5nm to 50nm or 300nm to 500nm) using a rotating ball mill, vibration mill, agitated horizontal or vertical media mill, basket mill, rotor/stator type machines, or attrition mill, for example. Material particles can be milled by batch operation or by way of recirculation and/or discrete pass. Any known type and size of media can be employed in the milling process, for example, glass, ceramics, sand, polymeric, and metal media with sizes in a range from 30 micron to about 10 cms. After milling the material particle distribution can be classified according to the required size. Suitable material particles can optionally be coated with one or more protective dielectric layers before using in a charged particle.

In electrophoretic media of embodiments the wavelength-selective material can be surrounded, or encapsulated, or sealed, or coated, by a dielectric and in this case does not come into direct contact with the suspending fluid. This is the preferred form of charged particles but the application of charge directly to pigment material where the pigment material is in contact with the suspending fluid is also possible. Suitable wavelength-selective material can be incorporated into the polymeric core of a charged particle, or the material can stud the surface of a polymeric core, or the material can form a coating effectively encapsulating a polymeric core, or the material can be the core in which case it can be surrounded with a dielectric layer or shell, or charge can be development directly on the material's surface. Any of the techniques known from the prior art can be used including: physical adsorption (i.e. physisorption) and/or precipitation of resin, oligomer, or polymer on a material particle's surface, chemical adsorption (i.e. chemisorption), electrostatic attraction, coacervation, or the polymerization of monomers or oligomers in the presence of material particles with or without cross-linking or curing. Polymerization can be realized through any known mechanism of polymerization, such as interfacial polymerization, in-situ polymerization, chain polymerization, condensative chain polymerization, poly condensation, polyaddition, polymer phase separation, coacervation, and free-radical polymerization. Other dielectric coating techniques include electrostatic coating, spray drying, fluidized bed coating, and solvent evaporation.

Dielectric coated material particles can exhibit a native surface charge, or a surface charge can be applied. For example, a charge control agent can be used, or particles can acquire a charge in the suspending fluid, or a large electrical field can induce a charge. Suitable charge control agents are described in the prior art and include polymeric and non-polymeric types that can be polar, ionic, non-ionic, ionic surfactants, or non-ionic surfactants. It will be appreciated that any of the processes from the prior art of electrophoretic displays for surrounding a material particle with a dielectric and applying a surface charged to achieve charged particles that demonstrate an electrophoretic mobility in a suspending fluid can be applied herein.

To promote the uniform spreading of charged particles adjacent a top electrode face in a first light state of embodiments charged particles are preferably spherical and preferably the particle mean is less than one micron. It has been found that the smaller the charged-particle mean the more liquid-like (i.e. uniform) spreading of particles becomes in a first light state of embodiments. More preferably, charged particles are less than 700nm, and most preferably charged particles are less than 600nm.

In electrophoretic media of embodiments a suspending fluid is isotropic, preferably colourless, transparent to visible light, transparent to sunlight infrared, preferably partially transparent to thermal radiation (i.e. longwave infrared), and refractive index matches polymer elements in an electrophoretic cell. In embodiments the refractive index of the suspending fluid is selected to match non-planar elements such as protrusions that form an interface with the medium in use and that cooperate with the medium to form one or more of its light states as previously described. Refractive index matching ensures negligible haze in the second light state and intermediate light states.

A suitable suspending fluid is preferably a blend of two or more fluids. A suitable suspending fluid has a conductivity from 0 pS/cm to 30 pS/cm, preferably 0 pS/cm to 10 pS/cm, and most preferably 0 pS/cm to 5 pS/cm, and is classified as an insulating fluid. Furthermore, a suitable suspending fluid has a dielectric constant of between 2.0 and 3, a boiling point of about 150°C or more, preferably 200°C or more, and a vapour pressure of about 0.1 mmHg or less. In some embodiments a fluid can be coloured with non-switching (i.e. does not exhibit electrophoresis) ultra-fine (i.e. 5nm to 50nm) suspended pigment. For example, a slight colour tint can be added to a suspending fluid to compensate for an undesirable colour tint caused by ITO electrodes. Sun Chemical's US2012/0092753 describes how coloured, non-polar fluid can be prepared incorporating suspended organic pigment (as opposed to solubilized dye). Such coloured fluid can be combined with charged particles and associated additives to make an electrophoretic ink. The document is silent with respect to the sunlight infrared spectrum properties of a coloured fluid.

In embodiments charged particles 17 (i.e. the first type), 15 (i.e. the second type) and 14 (i.e. the third type) have substantially a single polarity and can be positive or negative. Preferably, charged particles within each type have a similar electrophoretic mobility, and preferably move evenly within the suspending fluid in response to an applied electrical field.

In embodiments the wavelength-selective charged particles 17, 15 and 14 are provided with the capability to move over the surface of protrusions projecting into the electrophoretic medium in response to an electrical field. In addition to having a sufficiently strong electrical field to deflect charged particles over a solid's surface, particles also use one or more of steric hindrance, electrostatic repulsion, or chemical/functional incompatibility with a protrusion's surface.

The electrophoretic media described herein can be used in the electrophoretic cells, light attenuator films, and display devices described in EP 3 396 446 B. It will be appreciated that any electrophoretic device that has one or more transparent light states can equally be used as a substitute for the electrophoretic devices herein once the infrared-reflecting electrophoretic mediums and methods described herein are applied. The Figures showing light states of embodiments can be the light states of a solar control device or the light states of an electrophoretic cell section corresponding to an active matrix pixel.

In embodiments charged particles 17 provide the capability to turn-off (see Figure 2A) and turn-on (see Figure 2B) solar infrared heating of an inside environment (by selectively reflecting the sunlight infrared spectrum) in synch with turning-off and turning-on sunlight illumination (by selectively absorbing the sunlight visible spectrum) using the first and second light states respectively. And, using the intermediate light states embodiments provide the capability to vary solar infrared heating and sunlight illumination in synch (see Figures 5C and 5D).

In embodiments the charged particles reflect 33% or more of the sunlight infrared spectrum, and more preferably 50% or more, and most preferably 65% or more. Preferably particles 17 reflect thermal radiation (i.e. longwave infrared) as well as the sunlight infrared spectrum. In embodiments charged particles 17 reflect the sunlight infrared spectrum with a low level of absorption and consequential heat. In embodiments charged particles 17 diffusely reflect the sunlight infrared spectrum and in this regard, embodiments that use a large particle mean (i.e. about 1 micron) diffusely reflect infrared more strongly than those that use a small particle mean (about 300nm).

As described earlier, heating of charged particles 17 induced by exposure to sunlight is about halved by reflecting the sunlight infrared spectrum when compared to carbon black or copper chromite charged particles (i.e. those that absorb all sunlight bands). This reduces the build-up of heat (and operating temperature) in outdoor display embodiments and solar control embodiments.

In embodiments the charged particles appear black and a medium containing particles 17 at a sufficiently high loading has the capability to provide a first light state with a black appearance as well as intermediate light states between the first and second light states with a black tinted appearance.

Figures 2A to 3B showed that the electrophoretic medium has the capability to regulate solar transmission and provide variable, direct, sunlight infrared reflectance and variable, sunlight (visible + infrared) transmittance.

Suitable colourant for use in infrared-reflecting, charged particles 17 that absorb visible sunlight can be a mixture of metal oxide pigments (in particular in hematite form), or a mixture of complex inorganic coloured pigments, or a mixture or blend of these two. They possess excellent light fastness and have been proven in high performance paint for outdoor applications.

Colourant (or mixtures of colourants) having a sunlight infrared-reflecting, visible-absorbing property for use in electrophoretic inks of embodiments is selected from the following, or mixtures of some of the following: a spinel formulated primarily with nickel, manganese, chrome, and iron (i.e. C.I. Pigment Black 30), a mixture of halogenated copper phthalocyanine (i.e. C.I. Pigment Green 7) and perylenetetracarboxylic acid diimide (i.e. C.I. Pigment Violet 29), iron chromium oxide (e.g., $Fe_2O_3$ and $Cr_2O_3$ hematite), manganese iron oxide comprising an element selected from the group: magnesium, silicon, calcium, aluminium, barium or strontium carbonate, strontium manganese oxide (e.g., $Sr_2MnO_4$), doped strontium manganese oxide (e.g. doped with magnesium), calcium manganese oxide (e.g., $Ca_2MnO_4$), doped calcium manganese oxide, barium manganese oxide (e.g., $Ba_2MnO_4$), doped barium manganese oxide, manganese vanadium oxide (e.g., $Mn_2V_2O_7$), doped manganese vanadium oxide, bismuth manganese oxide (e.g., $Bi_2Mn_4O_{10}$), doped bismuth manganese oxide, yttrium manganese oxide (e.g., $YMnO_3$), lanthanum manganese oxide (e.g., $LaMnO_3$), cerium manganese oxide (e.g., $CeMnO_3$), and praseodymium manganese oxide (e.g., $PrMnO_3$).

In embodiments calcium manganese oxide, strontium manganese oxide, barium manganese oxide, or their equivalent doped materials, are preferred. These manganese oxide pigments are described in DMC2's US6,416,868 for example for use in black paint. Suitable pigment types are available as 10201 and 10203 Eclipse Black from Ferro Corporation (see www.ferro.com).

The listed metal oxide pigments can be prepared using a calcination process as is known in the prior art of colourants (or any suitable process from the prior art). In a calcination process oxides or compounds such as sulphate, carbonate or hydroxide can be used. After the calcination process pigment is ground by milling.

The listed colourants provide infrared-reflecting black charged particles 17 for the electrophoretic ink of embodiments. In use, the listed colourants provide resistance to high temperature, resistance to chemicals in the suspending fluid (when coated/encapsulated by a particle's dielectric layer so that pigment particles are not in direct contact with a suspending fluid), and resistance to weathering (in combination with a separate UV filter such as in an interlayer in a glass laminate). The durability of the listed colourants' chemistries has been proven in paint formulations used for architectural, automotive, marine, or aircraft applications. In relation to this latter point any black colourant chemistry proven in an outdoor paint formulation to significantly reflect the sunlight infrared spectrum is suitable for incorporation into an embodiment's charged particles.

In embodiments charged particles 15 are capable of responding to an electric field applied to the medium and moving through the suspending fluid 25 over the surface of protrusions projecting into the medium. In a first extreme light state particles 15 are capable of being maximally spread to lie in the path of sunlight through the medium and to substantially reflect the sunlight infrared spectrum and transmit the visible spectrum. In a second extreme light state particles 15 are capable of being maximally concentrated to remove them from the path of sunlight through the medium and to substantially transmit the sunlight infrared and visible spectrums through the medium. In embodiments charged particles 15 are capable of moving between the first and second light states to provide at least one light state intermediate the first and second states. In some embodiments visual access through the medium is maintained for all light states; in alternative embodiments the first light state can appear weakly translucent (i.e. transmits quasi diffuse light) restricting visual access while the second light state provides unrestricted visual access (i.e. transmits specular light and appears optically clear). In the latter embodiment visual access can be sufficiently restricted in the first light state that the medium denies visual access (i.e. transmits strongly diffuse light) and appears translucent.

Charged particles 15 decouple the sunlight infrared spectrum from the visible spectrum to provide the electrophoretic medium with the capability to turn-off (see Figure 1 A) and turn-on (see Figure 1B) solar infrared heating of an inside environment while maintaining transparency to visible light. And, using the intermediate light states embodiments provide the capability to vary solar infrared heating (see Figures 5C and 5D). By maintaining transparency to visible light the sunlight illumination of an inside environment remains near constant even though solar heating of the inside environment can be independently switched to provide weather-adaptable solar heating. In embodiments charged particles 15 are spectrally selective (i.e. wavelength-selective in the sunlight infrared spectrum) and provide an electrophoretic medium with the capability to function as an electrically switchable (i.e. active) spectrally selective layer for sunlight infrared.

In embodiments charged particles 15 reflect 33% or more of the sunlight infrared spectrum, and more preferably 50% or more, and most preferably 65% or more. Preferably particles 15 reflect thermal radiation (i.e. longwave infrared) as well as the sunlight infrared spectrum.

As described earlier, charged particles 15 resist heating-up appreciably when exposed to intense sunlight by reflecting the sunlight infrared spectrum and transmitting the visible spectrum. Figures 1A to 1B showed that the electrophoretic medium has the capability to regulate solar infrared transmission by providing variable, direct, sunlight infrared reflectance using its intermediate light states.

Wavelength-selective materials that are visible-light-transmitting and reflect infrared light for use in charged particles 15 of embodiments contain free electrons, are conductive, and possess a plasma frequency that corresponds to a plasma wavelength (i.e. (light velocity in the material)/(plasma frequency)). At a wavelength longer than a material's plasma wavelength incident light is reflected (and to a lesser extent absorbed) as the free electrons can respond at this frequency, and conversely at a shorter wavelength incident light is transmitted as the free electrons cannot respond. The plasma wavelength decreases proportionally with the square root of the free electron concentration, and in embodiments falls adjacent, or preferably in, the sunlight infrared spectrum and preferably is adjacent or near the visible spectrum. In embodiments a conductive material's plasma wavelength is selected to substantially reflect part or the entire sunlight infrared spectrum. The plasma angular frequency $\omega\rho$ and plasma wavelength $\lambda p$ are given in the prior art by:

$$\omega p = 2\,\pi\,c\,/\,\lambda_p = [\ N_e\,e^2/\ \varepsilon_0\,m^*\ ]^{\frac{1}{2}}$$

$N_e$ = the free electron density,
$m^*$ = effective electron mass,
e = electronic charge,
c = velocity of light,
$\varepsilon_0$= dielectric constant

In embodiments suitable wavelength-selective, conductive material is selected to have a plasma wavelength within the range from 0.65 to 2.0 microns, and preferably 0.7 to 1.75 microns, and most preferably 0.725 to 1.5 microns. The conductive material is provided in a form sufficiently thin to transmit the visible spectrum with an acceptably low level of attenuation (e.g. 30% or less attenuation). The material must also be sufficiently thin to select a resistivity corresponding to a material's required plasma wavelength.

Wavelength-selective conductive material that substantially transmits the sunlight visible spectrum and reflects the sunlight infrared spectrum can be a single material or a mixture of materials, and is selected from metal compounds, doped metals, and semiconductors, and provided with a resistivity and material thickness (e.g., a material particle's diameter) to obtain the selected plasma wavelength.

Suitable conductive material to obtain a plasma wavelength in or adjacent the sunlight infrared spectrum include metal oxides, metal nitrides, metal oxynitrides, and metal sulphides, and these materials can be doped with antimony or fluorine (or compounds of these), or with boride compounds, tin compounds, or aluminium compounds. The following semiconductors are suitable conductive material to obtain this plasma wavelength: tin-doped indium oxide (i.e. ITO), antimony-doped tin oxide (i.e. ATO), antimony oxide doped tin oxide, lanthanum hexaboride, aluminium-doped zinc oxide, indium-doped zinc oxide, tin-doped zinc oxide, silicon-doped zinc oxide, fluorine-doped zinc oxide, gallium-doped zinc oxide, fluorine-doped tin oxide, cadmium tin oxide, tungsten oxide, tungsten oxide composite, cobalt oxide, chromium oxide, iron oxide, nickel oxide, titanium nitride, or cerium hexaboride. In embodiments ITO, ATO and lanthanum hexaboride are preferred as infrared-reflecting, visible-light-transmitting, conductive material for use in charged particles, and a mixture of all three conductive materials is most preferred.

In embodiments infrared-reflecting, visible-light-transmitting material is in the form of fine particles that are sufficiently fine that interaction with visible light is negligible when dispersed within the core of a larger charged particle. This requires that about 90% (or more) of an infrared-reflecting particle's distribution lies in the size range 5nm to 50nm, and preferably 5nm to 30 nm. In this document this size range is referred to as ultra-fine. Figure 13 shows ultra-fine, infrared-reflecting, visible-light-transmitting particles dispersed within the polymer core of larger charged particles 700, 701 and 702. In other embodiments ultra-fine infrared particles can have a dielectric outer coating and charge layer (including steric hindrance) applied so that ultra-fine particles are themselves charged particles as shown in Figure 21.

In a preferred particle set (i.e. comprising ITO, ATO and lanthanum hexaboride) ATO has the longest plasma wavelength (about 1.4 micron), next is ITO (about 1 micron), and the shortest is lanthanum hexaboride (about 0.78 micron). ATO, ITO and lanthanum hexaboride ultra-fine particles (or any of the materials listed earlier) can be used either as sole infrared-reflecting, visible-light-transmitting particles in the electrophoretic medium, or advantageously they are used as a set of ultra-fine infrared-reflecting particles in the electrophoretic medium to achieve significant infrared reflection without significant absorption from about 0.78 microns to 2.5 micron (sunlight infrared). Lanthanum hexaboride can be used in a set with either of ITO or ATO but this is less effective than using all three in a set. ITO ultra-fine particles are available from American Elements Inc. (US) or Mitsui Kinzoku Co. Ltd (JP). ATO ultra-fine particles are available from American Elements Inc. (US) or Sumitomo Osaka Cement Co. Ltd (JP), and lanthanum hexaboride ultra-fine particles are available from American Elements Inc. (US).

In some embodiments ultra-fine, infrared-reflecting, visible-light-transmitting particles are dispersed with black pigment in the core of a charged particle to increase infrared reflectance of a black charged particle in a first light state.

Figure 13 shows a set of ultra-fine infrared-reflecting charged particles (synonymous with infrared-reflecting, visible-light-transmitting particles) dispersed within the core of larger charged particles. Steric stabilization/hindrance on the surface of charged particles and elements giving rise to surface charge are not shown, but these are similar to prior art charged particles (for visible light) for use in electrophoretic displays as discussed earlier. ITO ultra-fine particles 750 (typically 20nm to 50nm) are randomly dispersed in the polymer core 740 of wavelength-selective charged particles 700 (typically 300 to 1,000nm); ATO ultra-fine particles 751 are randomly dispersed in the polymer core 740 of wavelength-selective charged particles 701; and lanthanum-hexaboride, ultra-fine particles 752 are randomly dispersed in the polymer core 740 of wavelength-selective charged particles 702. The mixing of the ultra-fine particles in the core resin used to form charged particles can use any suitable technique such as a Zeppelin Reimelt mixer, a planetary mixer, a homogenizer, or an ultrasonic mixer.

By weight the percentage of ultra-fine, infrared-reflecting, visible-light-transmitting particles dispersed in wavelength-selective charged particles 700, 701 or 702 is less than 25%, and more preferably less than 15%, and most preferably less than 10%. By weight the amount of ITO to ATO material used in charged particles (i.e. 700 to 701) can be equal in the electrophoretic medium, or either can be in a majority. Lanthanum hexaboride is used as a percentage of the combined weight of ITO, ATO and lanthanum hexaboride material, and as a percentage of the combined weight in the electrophoretic medium lanthanum hexaboride is 0.1 % to 25%, more preferably, 1 % to 15%, and most preferably, 3% to 10%.

In charged particle 702 the amount of ultra-fine, lanthanum-hexaboride particles 752 is shown as being the same as for ATO charged particle 700 and for ITO charged particle 701. These charged particles can be combined in the electrophoretic medium in the percentages given. Alternatively a charged particle 702 can contain less lanthanum hexaboride than corresponding particles containing ITO and ATO. Wavelength-selective charged particle 703 shown in Figure 14 is similar to wavelength-selective charged particles 700, 701 and 702 except that a mixture of ultra-fine, infrared-reflecting particles of ITO, ATO and lanthanum hexaboride are included in a single charged particle 703. In charged particle 703 the weight of lanthanum hexaboride used as a percentage of the combined weight of ITO, ATO and lanthanum hexaboride, ultra-fine particles remains as given previously in relation to Figure 13 for the electrophoretic medium.

ATO, ITO, and lanthanum hexaboride, ultra-fine particles dispersed in charged particles substantially transmit visible light but with an associated nonuniform spectral transmission leading to an undesirable colour tint (i.e. not neutral) in embodiments. For example, wavelength-selective charged particles in the electrophoretic medium in a first light state can transmit visible light with a yellow-green tint. In embodiments ultra-fine colour pigment particles or dye particles can be added to complement the colour tint of the infrared-reflecting ultra-fine particles so that visible light transmitted by the electrophoretic cell appears neutral (i.e. without an apparent colour tint) in light states or with a desired colour tint.

Figure 15 shows a set of red (704), green (705) and blue (706) charged particles that use ultra-fine red pigment particles 753, ultra-fine green pigment particles 754, and ultra-fine blue pigment particles 755 respectively similar to the earlier form of particles in Figure 13. The weight of ultra-fine, complementary-colour particles (or colour dye material) used as a percentage of the combined weight with ITO, ATO and lanthanum hexaboride material (i.e. as a percentage of the sum of complementary colour and infrared-reflecting material) in the electrophoretic medium is 0.1% to 20%, and preferably, 0.5% to 10%. The level of complementary colour material added must be sufficient to perceivably complement the colour tint of the infrared-reflecting, visible-light-transmitting material, but it preferably is not so high as to significantly reduce visible light transmission.

In colour-complementary, charged particle 707 shown in Figure 16 ultra-fine pigment particles are combined in a ratio that complements the colour tint of ultra-fine infrared-reflecting particles. For example, ultra-fine red particles 753 and ultra-fine blue particles 755 can be used to complement the yellow-green colour tint of light transmitted by ultra-fine infrared-reflecting particles in a ratio of red to blue of approximately 2. In Figure 17 a wavelength-selective charged particle 708 has a mixture of ultra-fine, infrared-reflecting particles 750, 751 and 752 and ultra-fine, colour-complementary particles 753 and 755.

Embodiment 291 shown in Figure 18 shows stacked charged particles adjacent a top electrode 60 in a first light state. The other elements of an embodiment's electrophoretic cell are not shown but are similar to embodiment 280. Electrophoretic medium 730 has a suspending fluid 720 and a mix of wavelength-selective charged particles 700, 701 and 702 that each have a single ultra-fine particle type, and colour-complementary charged particles 704 and 706 that similarly each have a single ultra-fine particle type. The percentage mass of each type of charged particle with respect to the sum of the mass of all the charged particles (i.e. infrared-reflecting and colour-complementary) in the electrophoretic medium was given earlier (on the basis of the mass of material in each charged particle). It will be appreciated that in describing embodiment 280 earlier in relation to Figures 1A and 1B wavelength-selective charged particles 15 were described as a single particle type when in practice an infrared-reflecting electrophoretic medium can comprise a mixture of wavelength-selective charged particles and colour complementary charged particles (e.g., as shown in embodiment 291) to construct the functionality described for the second particle type (i.e. particles 15).

Embodiment 292 shown in Figure 19 shows stacked charged particles adjacent a top electrode 60 in a first light state and is similar to Figure 18. Electrophoretic medium 731 has a suspending fluid 721 and a mix of wavelength-selective charged particles 703 (that are a mix of different ultra-fine infrared-reflecting particles) and colour-complementary charged particles 707 (that are a mix of different ultra-fine colour particles). It will be appreciated that in practice an infrared-reflecting electrophoretic medium can comprise a mixture of wavelength-selective charged particles and colour complementary charged particles each of whose charged particles are mixtures of ultra-fine particles of different types as shown in embodiment 292.

Embodiment 293 shown in Figure 20 shows stacked charged particles adjacent a top electrode 60 in a first light state and is similar to Figures 18 and 19. Electrophoretic medium 732 has a suspending fluid 722 and a single wavelength-selective charged particle type 708 that itself is a mix of different ultra-fine infrared-reflecting particles and different ultra-fine colour-complementary particles. In relation to the earlier description of embodiment 280 wavelength-selective charged particles 708 correspond directly with wavelength-selective charged particles 15. Embodiments 291, 292 and 293 diffuse visible light transmitted in the first light state to varying degrees depending on the refractive index mismatch between their charged particles and the suspending fluid. To minimize the refractive index mismatch a charged particle's core polymer 740 is selected to index match (i.e. about 0.002 or less) the suspending fluid's index. However, the dispersed ultra-fine conductive and colour particles raise the resulting particle's index causing some light scattering. In other embodiments strong light diffusing is required and a charged particle's core polymer 740 is selected to significantly mismatch the suspending fluid (i.e. about 0.01 or more).

Figure 21 has similarities with Figure 13 and shows a set of wavelength-selective charged particles except that in Figure 21 each charged particle is a single ultra-fine particle (i.e. 90% of the particle distribution lies in the size range 5nm to 50nm). Wavelength-selective charged particle 709 has an ultra-fine ITO particle core; wavelength-selective charged particle 710 has an ultra-fine ATO particle core; and wavelength-selective charged particle 711 has an ultra-fine lanthanum hexaboride particle core. These ultra-fine charged particles have a conductive core and are coated with (or encapsulated by) a dielectric material such as a polymer or a silicon oxide. Steric stabilization/hindrance on the surface of ultra-fine charged particles and surface charge elements are not shown, but these are similar to prior art charged particles (for visible light) for use in electrophoretic displays as discussed earlier.

Figure 22 is similar to Figure 15 and shows a set of colour-complementary charged particles for use with wavelength-selective charged particles except that in Figure 22 each charged particle is a single ultra-fine pigment or dye particle. Colour-complementary charged particle 712 has an ultra-fine red particle core; colour-complementary charged particle 713 has an ultra-fine green particle core; and colour complementary charged particle 714 has an ultra-fine blue particle core. Similar to the ultra-fine wavelength-selective charged particles, the ultra-fine colour-complementary charged particles have their core coated with (or encapsulated by) a dielectric material such as a polymer or a silicon oxide, and steric stabilization/hindrance and charge is applied to this dielectric surface (not shown in Figure 22).

In embodiment 294 shown in Figure 23 ultra-fine charged particles stack as a quasi-lattice in a first light state. The gap between particles is sufficiently small (from < lnm to a few nm) and the lattice is sufficiently uniform that the transmission of visible light by ultra-fine wavelength-selective charged particles has near negligible (or less) light scattering. Sunlight ray 1675 has its visible spectrum substantially transmitted by stacked (quasi-lattice) ultra-fine wavelength-selective charged particles while the infrared spectrum is substantially reflected (see reflected ray 1676).

In Figure 23 ultra-fine wavelength-selective charged particles are mixed with a low relative percentage of ultra-fine, colour-complementary charged particles in the electrophoretic medium 733 that has a suspending fluid 723. The percentage weight of each type of ultra-fine charged particle with respect to the sum of the weights of all the ultra-fine charged particles (i.e. infrared-reflecting and colour-complementary) in the electrophoretic medium 733 was described earlier (i.e. with respect to the core, ultra-fine, particle material).

The transmission of visible light through an ultra-fine particle quasi-lattice can have an associated non-uniform spectral transmission arising from the quasi-lattice structure. This is in addition to the non-uniform spectral transmission of the infrared-reflecting, visible-light-transmitting materials used in a set of ultra-fine wavelength-selective particles, and the effects give rise to a colour tint. In embodiments ultra-fine, colour-complementary charged particles are used to negate the non-uniform spectral transmission of infrared reflecting materials, and the non-uniform spectral transmission of ultra-fine, wavelength-selective charged particles arising from the quasi-lattice structure of light states.

In Figure 23 the thickness in the z-axis of a layer comprising stacked ultra-fine wavelength-selective charged particles (with an optional low relative percentage of ultra-fine colour-complementary charged particles) in a first light state is indicated by dimension 1070. In embodiments the thickness of a layer comprising stacked ultra-fine charged particles in a first light state is from 20nm to 300nm, more preferably from 30nm to 200nm, and most preferably from 50nm to 150nm. By contrast, the diameter of a wavelength-selective charged particle that has ultra-fine particles dispersed in its core (see Figures 13, 14 and 17) is typically 300nm to 1,000nm, and such charged particles are stacked in a first light state (as shown in Figures 18, 19 and 20 respectively) with a thickness of three or more times that of dimension 1070 in embodiment 294.

The description of the earlier embodiment 280 (see Figures 1A and 1B) is equally applicable to embodiments 291, 292, 293 and 294. The latter embodiments are specific examples of the embodiment functionality represented by 280.

In the preceding description suitable infrared-reflecting materials have a plasma wavelength adjacent or in the sunlight infrared spectrum, and the conductive materials transmit visible light in nm scale thicknesses. Pigment or dye material complements the non-uniform visible light transmission of infrared-reflecting materials, and the pigment or dye material did not have a role in absorbing or reflecting the sunlight infrared spectrum. In some embodiments supplemental pigment or dye material is used to absorb or reflect (i.e. reject) part of the sunlight infrared spectrum, and in particular infrared light in the region from 0.78 micron to 1.2 micron. In this regard this infrared-rejecting pigment or dye material replaces or supplements lanthanum hexaboride (see earlier description).

The infrared-rejecting pigment or dye material can be used in embodiments as ultra-fine particles dispersed in the core of larger charged particles or combined with the already described ultra-fine particles (e.g., ITO, ATO or lanthanum hexaboride) within charged particles as per Figures 13 to 19. Alternatively, ultra-fine infrared-rejecting pigment (or dye) particles can themselves be charged particles and combined with the ultra-fine wavelength-selective charged particles already described in relation to Figures 21 to 23.

Suitable infrared-rejecting pigment or dye material rejects significantly more light in the sunlight infrared spectrum than in the visible spectrum. For example, a suitable material has an absorptance of four times or more for sunlight infrared than for visible light. Ultra-fine colour-complementary particles can be used in embodiments to complement the colour of visible light transmitted by infrared-rejecting pigment or dye particles (as described earlier in relation to ITO, ATO and lanthanum hexaboride, ultra-fine particles).

Suitable infrared pigment or dye materials or compounds for use to supplement the rejection profile for sunlight infrared in the electrophoretic medium of embodiments are selected from the following: diimmonium, aminium, diazene, quaterrylenetetracarboxylic diazene, anthraquinone, phthalocyanine, benzenedithiol ammonium, thiourea derivatives, polymethine, or a thiol metallic complex. A diimmonium compound is preferred. For background information on diimmonium compounds see Nippon Kayaku's US7,521,006. Suitable infrared-rejecting pigment and dye material is available from Nippon Kayaku Co. Ltd (JP), Epolin Inc. (US), or Mitsui Toatsu Chemical Co. Ltd (JP).

In embodiments that combine infrared-rejecting pigment or dye material with ITO or ATO material the infrared pigment (or dye) material is given as a percentage of the combined weight of ITO, ATO and infrared pigment material: as a percentage of the combined weight in the electrophoretic medium it is 0.1% to 33%, more preferably, 1% to 25%, and most preferably, 3% to 20%.

In arrangements charged particles 14 are capable of responding to an electric field applied to the medium and moving through the suspending fluid over the surface of protrusions projecting into the medium. In a first extreme light state particles 14 are capable of being maximally spread to lie in the path of sunlight through the medium and substantially transmit the sunlight infrared spectrum and absorb the visible spectrum. In a second extreme light state particles 14 are capable of being maximally concentrated to remove them from the path of sunlight through the medium and to substantially transmit the sunlight infrared and visible spectrums through the medium thereby providing visual access through the medium. In arrangements charged particles 14 are capable of moving between the first and second light states to provide at least one light state intermediate the first and second states.

In arrangements charged particles 14 transmit the sunlight infrared spectrum with a low level of absorption and consequential heat.

In arrangements charged particles 14 decouple the sunlight visible spectrum from the infrared spectrum to provide the capability to turn-off (see Figure 4A) and turn-on (see Figure 4B) sunlight illumination of an inside environment (by selectively absorbing the sunlight visible spectrum) while maintaining solar infrared heating (by transmitting the sunlight infrared spectrum) using the first and second light states respectively. And, using the intermediate light states arrangements provide the capability to vary sunlight illumination while maintaining solar infrared heating.

In arrangements charged particles 14 transmit 50% or more of the sunlight infrared spectrum, and more preferably 60% or more, and most preferably 65% or more. Preferably particles 14 significantly transmit thermal radiation (i.e. longwave infrared) as well as the sunlight infrared spectrum. As described earlier, heating of charged particles 14 induced by exposure to sunlight is about halved by transmitting the sunlight infrared spectrum when compared to carbon black or copper chromite charged particles (i.e. those that absorb all sunlight bands).

In arrangements charged particles 14 appear black and a medium containing particles 14 at a sufficiently high loading has the capability to provide a first light state with a black appearance as well as intermediate light states between the first and second light states with a black tinted appearance. Figures 4A and 4B show that the electrophoretic medium has the capability to provide variable, visible sunlight transmittance and consequently variable, illumination of an inside environment, and can deny visual access in a maximally spread light state while maintaining sunlight infrared transmittance to provide solar heating. In alternative arrangements the electrophoretic medium can be used in a solar control device that has a separate spectrally-selective coating adjacent the electrophoretic cell to reflect the sunlight infrared to an outside environment.

The wavelength-selective property of charged particles of this third type is derived from colourant (i.e. pigment or dye) within the core of particles and suitable colourant transmits the sunlight infrared spectrum and strongly absorbs the visible spectrum. Preferably said colourant appears black. In arrangements suitable colourant or mixture can be selected from the class of outdoor paint pigments where the pigments exhibit excellent light-fastness and weather-fastness with demonstrable transmittance of the sunlight infrared spectrum.

Infrared-transparent, colourant (or mixtures of colourants) for use in the black electrophoretic inks of arrangements is selected from the following, or mixtures of some of the following: aniline black, pyrazolone, perinone, azo, azomethine, coumarin, anthraquinone, methane, metal complexes of azo, metal complexes of azomethine, metal complexes of methine, quinacridone, dioxazine, isoindoline, isoindolinone, phthalocyanine, pyrrolopyrrole, thioindigo, bismuth vanadate, and perylene pigments.

In arrangements black perylene pigment that is a condensate of perylene, dianhydride / tetracarboxylic acid and an aromatic diamine is preferred as the infrared-transmitting, black pigment for use in the third type of wavelength-selective charged particles. Perylene pigments in the core of charged particles exhibit excellent light-fastness and weather-fastness when exposed to intense sunlight.

Perylene pigment types are discussed in BASF's US7,416,601 or US2011/0064935 for example. A suitable perylene pigment powder as a raw material of a pigment blend for use in the core of black charged particles of arrangements includes BASF Paliogen Black L0086. This organic pigment strongly absorbs visible light and has a jet black appearance. It has an abrupt absorption decrease at about 0.7 microns wavelength allowing sunlight infrared to be transmitted. Typically its absorptance of sunlight infrared is 10% or less. In arrangements a perylene black pigment in the core of charged black particles of an electrophoretic ink partially transmits thermal radiation emitted by black charged particles or reflected by an incorporated low emissivity coating.

While the description has been about perylene black pigment it will be appreciated that coloured perylene pigment can be used in arrangements requiring a coloured first light state. For example, red shades of perylene pigment for high performance applications such as automotive coatings are available from Sun Chemical in its Perrindo range.

In some arrangements an infrared-transmitting black pigment blend for a black electrophoretic ink can also include a small amount of titanium dioxide pigment. The small proportion of titanium dioxide when added to a black perylene blend in a black electrophoretic ink can be sufficient to cause sunlight infrared to be partly or near completely reflected. Furthermore, an infrared-transmitting black pigment blend can also include any mixture of ultra-fine, infrared-reflecting, visible-light-transmitting materials as described later.

The three electrophoretic media have been described with each being associated with a particular wavelength-selective particle type, but an electrophoretic medium can also contain other particle types as described earlier. An electrophoretic medium can be adapted for (or tailored to) an operating climate by selecting the type and relative mass fraction of wavelength-selective charged particles within its suspending fluid, and mixtures include one of the following:

a) a mixture including the first (17) and second (15) charged particle types, and
b) a mixture including the second (15) and third charged (14) particle types.

Figures 5A to 6B describe electrophoretic mediums having charged particles 17 and 15. Both charged particle types have a similar electrophoretic mobility in Figures 5A to 5D and a significantly different mobility in Figures 6A to 6D. In embodiments having similar mobility the two types are combined to provide common light states with the sunlight interaction determined by the combined functionality and relative fraction (by mass) of each particle type for the sunlight infrared and visible spectrums. In alternative embodiments where the mean electrophoretic mobility of each type is significantly different (and the range of mobility sufficiently narrow for each type) the electrophoretic medium provides the capability of independent light states for each type. In such embodiments light states include one type being maximally spread while another is concentrated or both being concentrated or various combinations of intermediate light states to regulate sunlight infrared transmittance, attenuate visible light, and provide or deny visual access.

Figures 7A to 8B describe electrophoretic media having charged particles 15 and 14. Both charged particles have a similar electrophoretic mobility in Figures 7A and 7B and a significantly different mobility in Figures 8 A and 8B.

In these embodiments the two particle types have a common polarity. It is also possible that the different types could have an opposite polarity in an electrophoretic medium.

In some embodiments an electrophoretic medium further comprises a low level of charged particles (i.e. 10% or less by mass of all charged particles, and preferably 5% or less) of a type that scatters visible light (e.g., titanium dioxide) to enhance the ability of black charged particles to block visual access in the maximally spread light state (i.e. the first light state).

## Claims

1. A solar control device (280) comprising:

   a first electrode (60),
   a second electrode (60) spaced apart from said first electrode,
   between said electrodes, an electrophoretic cell (380) containing an electrophoretic ink (35), said ink having charged particles (14, 15, 17) suspended in a suspending fluid (25) and the charged particles (14, 15, 17) comprising wavelength-selective charged particles (15) of a second type, wherein each particle of the second type substantially reflects part of the sunlight infrared spectrum,
   the solar control device being arranged such that said wavelength-selective charged particles (15) of the second type are responsive to an electric field applied by said electrodes (60) to move between: a first extreme light state in which said particles (15) of the second type are maximally spread within said cell (380) to lie in the path of sunlight entering the cell (380) through the first electrode (60) and to reflect infrared in the sunlight back through the first electrode (60) and a second extreme light state in which said particles (15) of the second type are maximally concentrated within the cell (380) to remove them from the path of sunlight through the cell and to transmit infrared in sunlight entering the cell (380) through the first electrode (60) to exit the cell (380) through the second electrode (60);
   wherein each particle of the wavelength-selective charged particles (15) of the second type substantially transmits visible light.

2. A solar control device according to claim 1 wherein the solar control device is arranged such that said wavelength-selective charged particles (15) of the second type move between said first and second extreme light states to provide at least one light state intermediate said first and second states.

3. A device including one of: a sunlight attenuator, a sunlight shutter, a sunlight modulator, a variable sunlight transmittance sheet, a variable sunlight rejection sheet, a variable sunlight reflectance sheet, or a sunlight glare-avoidance device incorporating the solar control device as claimed in claim 1

4. A solar control device according to claim 1 wherein said electrophoretic ink further comprises wavelength-selective charged particles (17) of a first type which substantially reflect a significant part of the sunlight infrared spectrum and strongly absorb visible light.

5. A solar control device according to claim 4 wherein the solar control device is arranged such that said wavelength-selective charged particles (17) of the first type are responsive to said applied electric field to move between said first and second light states to turn-off and turn-on transmission of solar infrared light through the cell (383) synchronously with turning-off and turning-on transmission of visible light therethrough.

6. A solar control device according to claim 4 wherein said wavelength-selective charged particles (15) of the second type contain conductive material and the conductive material is provided in a form sufficiently thin to transmit with minimal attenuation the visible spectrum and exhibits a plasma wavelength selected to substantially reflect part or the entire sunlight infrared spectrum.

7. A solar control device according to claim 4 wherein the solar control device is arranged such that said electrophoretic cell in said first light state diffusely reflects 33% or more of the sunlight infrared spectrum.

8. A solar control device according to claim 4 wherein said electrophoretic ink further comprises wavelength-selective charged particles (14) of a third type that substantially transmit the sunlight infrared spectrum and absorb the visible spectrum.

9. A solar control device according to claim 1 wherein said electrophoretic cell comprises the electrophoretic ink distributed in discrete volumes, wherein said volumes of said electrophoretic ink form a monolayer adjacent one of said electrodes (60) on one side and are adjacent a non-planar polymer structure comprising a monolayer of close packed protrusions (2, 3) on the opposite side, and the protrusions (2, 3) project into the volumes, and the solar control device being arranged such that in the second light state said wavelength-selective charged particles (15) of the second move over a protrusion's surface projecting into one of said volumes in response to an applied electrical field to concentrate in the space between protrusions (2, 3).

**10.** A solar control device according to claim 4, wherein said charged particles (17) of the first type contain colourant being selected from the following: a spinel formulated primarily with nickel, manganese, chrome, and iron; a mixture of halogenated copper phthalocyanine and perylenetetracarboxylic acid diimide; iron chromium oxide; manganese iron oxide comprising an element selected from the group: magnesium, silicon, calcium, aluminium, barium or strontium carbonate; strontium manganese oxide; doped strontium manganese oxide; calcium manganese oxide; doped calcium manganese oxide; barium manganese oxide; doped barium manganese oxide; manganese vanadium oxide; doped manganese vanadium oxide; bismuth manganese oxide; doped bismuth manganese oxide; yttrium manganese oxide; lanthanum manganese oxide; cerium manganese oxide; and praseodymium manganese oxide; and preferably said colourant is selected from: calcium manganese oxide, strontium manganese oxide, or barium manganese oxide.

**11.** A solar control device according to claim 6 wherein said conductive material is selected from semiconductors including: tin-doped indium oxide, antimony-doped tin oxide, antimony oxide doped tin oxide, lanthanum hexaboride, aluminium-doped zinc oxide, indium-doped zinc oxide, tin-doped zinc oxide, silicon-doped zinc oxide, fluorine-doped zinc oxide, gallium-doped zinc oxide, fluorine-doped tin oxide, cadmium tin oxide, tungsten oxide, tungsten oxide composite, cobalt oxide, chromium oxide, iron oxide, nickel oxide, titanium nitride, or cerium hexaboride; and preferably said conductive material comprises a mixture of tin-doped indium oxide, antimony-doped tin oxide and lanthanum hexaboride.

**Patentansprüche**

**1.** Solarsteuerungsvorrichtung (280), Folgendes umfassend:

eine erste Elektrode (60),
eine zweite Elektrode (60), die von der ersten Elektrode beabstandet ist,
eine elektrophoretische Zelle (380) zwischen den Elektroden, die eine elektrophoretische Tinte (35) enthält, wobei die Tinte geladene Partikel (14, 15, 17) aufweist, die in einer Suspensionsflüssigkeit (25) suspendiert sind, und wobei die geladenen Partikel (14, 15, 17) wellenlängenselektive geladene Partikel (15) eines zweiten Typs umfassen, wobei jeder Partikel des zweiten Typs einen Teil des infraroten Sonnenlichtspektrums im Wesentlichen reflektiert, wobei die Solarsteuerungsvorrichtung derartig angeordnet ist, dass die wellenlängenselektiven geladenen Partikel (15) des zweiten Typs auf ein elektrisches Feld reagieren, das durch die Elektroden (60) angelegt wird, um sich zwischen Folgendem zu bewegen: einem ersten extremen Lichtzustand, in dem die Partikel (15) des zweiten Typs in der Zelle (380) maximal verteilt sind, um in dem Weg des Sonnenlichts zu liegen, das durch die erste Elektrode (60) in die Zelle (380) eintritt, und um Infrarot in dem Sonnenlicht zurück durch die erste Elektrode (60) zu reflektieren, und einem zweiten extremen Lichtzustand, in dem die Partikel (15) des zweiten Typs in der Zelle (380) maximal konzentriert sind, um sie aus dem Weg des Sonnenlichts durch die Zelle zu entfernen und Infrarot in dem Sonnenlicht zu übertragen, das durch die erste Elektrode (60) in die Zelle (380) eintritt, um die Zelle (380) durch die zweite Elektrode (60) zu verlassen; wobei jeder Partikel der wellenlängenselektiven geladenen Partikel (15) des zweiten Typs im Wesentlichen sichtbares Licht überträgt.

**2.** Solarsteuerungsvorrichtung nach Anspruch 1, wobei die Solarsteuerungsvorrichtung derartig angeordnet ist, dass sich die wellenlängenselektiven geladenen Partikel (15) des zweiten Typs zwischen dem ersten und dem zweiten extremen Lichtzustand bewegen, um mindestens einen Lichtzustand zwischen dem ersten und dem zweiten Zustand bereitzustellen.

**3.** Vorrichtung, die eines der folgenden Elemente umfasst: einen Sonnenlichtdämpfer, eine Sonnenlichtblende, einen Sonnenlichtmodulator, eine Folie mit variabler Sonnenlichtdurchlässigkeit, eine Folie mit variabler Sonnenlichtsperrung, eine Folie mit variabler Sonnenlichtreflexion oder eine Vorrichtung zur Sonnenlicht-Blendungsvermeidung, welche die Solarsteuerungsvorrichtung nach Anspruch 1 einbezieht.

**4.** Solarsteuerungsvorrichtung nach Anspruch 1, wobei die elektrophoretische Tinte weiterhin wellenlängenselektive geladene Partikel (17) eines ersten Typs umfasst, die einen signifikanten Teil des infraroten Sonnenlichtspektrums im Wesentlichen reflektieren und sichtbares Licht stark absorbieren.

**5.** Solarsteuerungsvorrichtung nach Anspruch 4, wobei die Solarsteuerungsvorrichtung derartig eingerichtet ist, dass die wellenlängenselektiven geladenen Partikel (17) des ersten Typs auf das angelegte elektrische Feld reagieren, um sich zwischen dem ersten und dem zweiten Lichtzustand zu bewegen, um eine Übertragung von infrarotem Sonnenlicht durch die Zelle (383) synchron mit Ausschalten und Einschalten einer Übertragung von sichtbarem Licht durch diese hindurch auszuschalten und einzuschalten.

6. Solarsteuerungsvorrichtung nach Anspruch 4, wobei die wellenlängenselektiven geladenen Partikel (15) des zweiten Typs leitfähiges Material enthalten und das leitfähige Material in einer Form bereitgestellt ist, die ausreichend dünn ist, um das sichtbare Spektrum mit minimaler Dämpfung zu übertragen, und eine Plasmawellenlänge zeigt, die ausgewählt ist, um das gesamte infrarote Sonnenlichtspektrum oder einen Teil davon im Wesentlichen zu reflektieren.

7. Solarsteuerungsvorrichtung nach Anspruch 4, wobei die Solarsteuerungsvorrichtung derartig eingerichtet ist, dass die elektrophoretische Zelle in dem ersten Lichtzustand 33 % oder mehr des infraroten Sonnenlichtspektrums diffus reflektiert.

8. Solarsteuerungsvorrichtung nach Anspruch 4, wobei die elektrophoretische Tinte weiterhin wellenlängenselektive geladene Partikel (14) eines dritten Typs umfasst, die das infrarote Sonnenlichtspektrum im Wesentlichen übertragen und das sichtbare Spektrum absorbieren.

9. Solarsteuerungsvorrichtung nach Anspruch 1, wobei die elektrophoretische Zelle die elektrophoretische Tinte in diskreten Volumen verteilt umfasst, wobei die Volumen der elektrophoretischen Tinte eine Monoschicht einer der Elektroden (60) benachbart auf einer Seite ausbilden und einer nichtplanaren Polymerstruktur benachbart sind, die eine Monoschicht eng gepackter Protrusionen (2, 3) auf der entgegengesetzten Seite umfasst, und die Protrusionen (2, 3) in die Volumen vorstehen, und wobei die Solarsteuerungsvorrichtung derartig angeordnet ist, dass sich die wellenlängenselektiven geladenen Partikel (15) des zweiten Typs in dem zweiten Lichtzustand über eine Oberfläche einer Protrusion, die in eines der Volumen vorsteht, als Reaktion auf ein angelegtes elektrisches Feld bewegen, um sich in dem Raum zwischen Protrusionen (2, 3) zu konzentrieren.

10. Solarsteuerungsvorrichtung nach Anspruch 4, wobei die geladenen Partikel (17) des ersten Typs einen Farbstoff enthalten, der aus der Gruppe ausgewählt ist, bestehend aus: einem Spinell, der primär mit Nickel, Mangan, Chrom und Eisen formuliert ist; einer Mischung aus halogeniertem Kupferphthalocyanin und Perylentetracarbonsäurediimid; Eisen-Chromoxid; Mangan-Eisenoxid, das ein Element umfasst, das aus der Gruppe ausgewählt ist, bestehend aus: Magnesium, Silizium, Calcium, Aluminium, Barium oder Strontiumcarbonat; Strontium-Manganoxid; dotiertes Strontium-Manganoxid; Calcium-Manganoxid; dotiertes Calcium-Manganoxid; Barium-Manganoxid; dotiertes Barium-Manganoxid; Mangan-Vanadiumoxid; dotiertes Mangan-Vanadiumoxid; Bismut-Manganoxid; dotiertes Bismut-Manganoxid; Yttrium-Manganoxid; Lanthan-Manganoxid; Cer-Manganoxid; und Praseodym-Manganoxid; und vorzugsweise ist der Farbstoff aus der Gruppe ausgewählt, bestehend aus: Calcium-Manganoxid, Strontium-Manganoxid oder Barium-Manganoxid.

11. Solarsteuerungsvorrichtung nach Anspruch 6, wobei das leitfähige Material aus Halbleitern ausgewählt ist, die folgende umfassen: mit Zinn dotiertes Indiumoxid, mit Antimon dotiertes Zinnoxid, mit Antimonoxid dotiertes Zinnoxid, Lanthanhexaborid, mit Aluminium dotiertes Zinkoxid, mit Indium dotiertes Zinkoxid, mit Zinn dotiertes Zinkoxid, mit Silizium dotiertes Zinkoxid, mit Fluor dotiertes Zinkoxid, mit Gallium dotiertes Zinkoxid, mit Fluor dotiertes Zinnoxid, Cadmium-Zinnoxid, Wolframoxid, Wolframoxid-Verbundstoff, Kobaltoxid, Chromoxid, Eisenoxid, Nickeloxid, Titannitrid oder Cerhexaborid; und vorzugsweise umfasst das leitfähige Material eine Mischung aus mit Zinn dotiertem Indiumoxid, mit Antimon dotiertem Zinnoxid und Lanthanhexaborid.

## Revendications

1. Dispositif de contrôle solaire (280) comprenant :

une première électrode (60),
une deuxième électrode (60) espacée de ladite première électrode,
entre lesdites électrodes, une cellule électrophorétique (380) contenant une encre électrophorétique (35) ladite encre ayant des particules chargées (14, 15, 17) en suspension dans un fluide de suspension (25) et les particules chargées (14, 15, 17) comprenant des particules chargées sélectives en longueur d'onde (15) d'un deuxième type, dans lequel chaque particule du deuxième type réfléchit sensiblement une partie du spectre infrarouge du rayonnement solaire, le dispositif de contrôle solaire étant agencé de telle sorte que lesdites particules chargées sélectives en longueur d'onde (15) du deuxième type sont sensibles à un champ électrique appliqué par lesdites électrodes (60) pour se déplacer entre : un premier état lumineux extrême dans lequel lesdites particules (15) du deuxième type sont étalées au maximum à l'intérieur de ladite cellule (380) pour se trouver sur la trajectoire du rayonnement solaire entrant dans la cellule (380) par la première électrode (60) et pour réfléchir la partie infrarouge dans le rayonnement solaire de nouveau par la première électrode (60), et un deuxième état lumineux extrême dans lequel lesdites particules (15) du deuxième type sont concentrées au maximum à l'intérieur de la cellule (380) pour les retirer de la trajectoire du rayonnement solaire à travers la cellule et pour transmettre la partie infrarouge dans le rayonnement solaire entrant dans la cellule (380) par la première électrode (60) pour qu'elle sorte de la cellule (380) par la deuxième électrode (60) ;

dans lequel chaque particule parmi les particules chargées sélectives en longueur d'onde (15) du deuxième type transmet sensiblement la lumière visible.

2. Dispositif de contrôle solaire selon la revendication 1, le dispositif de contrôle solaire étant agencé de telle sorte que lesdites particules chargées sélectives en longueur d'onde (15) du deuxième type se déplacent entre lesdits premier et deuxième états lumineux extrêmes pour fournir au moins un état lumineux intermédiaire entre lesdits premier et deuxième états.

3. Dispositif comportant un élément parmi : un dispositif d'atténuation du rayonnement solaire, un dispositif d'obturation du rayonnement solaire, un dispositif de modulation du rayonnement solaire, une feuille à transmittance variable du rayonnement solaire, une feuille à rejet variable du rayonnement solaire, une feuille à réflectance variable du rayonnement solaire, ou un dispositif évitant l'éblouissement par le rayonnement solaire, intégrant le dispositif de contrôle solaire selon la revendication 1.

4. Dispositif de contrôle solaire selon la revendication 1 dans lequel ladite encre électrophorétique comprend en outre des particules chargées sélectives en longueur d'onde (17) d'un premier type qui réfléchissent sensiblement une partie significative du spectre infrarouge du rayonnement solaire et absorbent fortement la lumière visible.

5. Dispositif de contrôle solaire selon la revendication 4, le dispositif de contrôle solaire étant agencé de telle sorte que lesdites particules chargées sélectives en longueur d'onde (17) du premier type sont sensibles audit champ électrique appliqué pour se déplacer entre lesdits premier et deuxième états lumineux pour désactiver et activer la transmission du rayonnement infrarouge solaire à travers la cellule (383) de façon synchrone avec la désactivation et l'activation de la transmission de la lumière visible à travers celles-ci.

6. Dispositif de contrôle solaire selon la revendication 4 dans lequel lesdites particules chargées sélectives en longueur d'onde (15) du deuxième type contiennent un matériau conducteur et le matériau conducteur est fourni sous une forme suffisamment mince pour transmettre avec une atténuation minimale le spectre visible et présente une longueur d'onde plasma sélectionnée pour réfléchir sensiblement une partie ou la totalité du spectre infrarouge du rayonnement solaire.

7. Dispositif de contrôle solaire selon la revendication 4, le dispositif de contrôle solaire étant agencé de telle sorte que ladite cellule électrophorétique dans ledit premier état lumineux réfléchit de façon diffuse au moins 33 % du spectre infrarouge du rayonnement solaire.

8. Dispositif de contrôle solaire selon la revendication 4 dans lequel ladite encre électrophorétique comprend en outre des particules chargées sélectives en longueur d'onde (14) d'un troisième type qui transmettent sensiblement le spectre infrarouge du rayonnement solaire et absorbent le spectre visible.

9. Dispositif de contrôle solaire selon la revendication 1 dans lequel ladite encre électrophorétique comprend l'encre électrophorétique répartie dans des volumes discrètes, dans lequel lesdits volumes de ladite encre électrophorétique forment une monocouche adjacente à une desdites électrodes (60) sur un côté et sont adjacents à une structure polymère non plane comprenant une monocouche de saillies compactes (2, 3) sur le côté opposé, et les saillies (2, 3) se projettent à l'intérieur des volumes, et le dispositif de contrôle solaire étant agencé de telle sorte que, dans le deuxième état lumineux, lesdites particules chargées sélectives en longueur d'onde (15) du deuxième type se déplacent sur la surface d'une saillie se projetant à l'intérieur d'un desdits volumes en réponse à un champ électrique appliqué pour se concentrer dans l'espace entre saillies (2, 3).

10. Dispositif de contrôle solaire selon la revendication 4, dans lequel lesdites particules chargées (17) du premier type contiennent un colorant choisi parmi les suivants : un spinelle formulé principalement avec du nickel, du manganèse, du chrome et du fer ; un mélange de phtalocyanine de cuivre halogénée et de diimide d'acide pérylènetétracarboxylique ; oxyde de fer et de chrome ; oxyde de manganèse et de fer comprenant un élément choisi dans le groupe suivant : carbonate de magnésium, silicium, calcium, aluminium, baryum ou strontium ; oxyde de strontium et de manganèse ; oxyde de strontium et de manganèse dopé ; oxyde de calcium et de manganèse ; oxyde de calcium et de manganèse dopé ; oxyde de baryum et de manganèse ; oxyde de baryum et de manganèse dopé ; oxyde de manganèse et de vanadium ; oxyde de manganèse et de vanadium dopé ; oxyde de bismuth et de manganèse ; oxyde de bismuth et de manganèse dopé ; oxyde d'yttrium et de manganèse ; oxyde de lanthane et de manganèse ; oxyde de cérium et de manganèse ; et oxyde de praséodyme et de manganèse ; et de préférence ledit colorant est choisi parmi : l'oxyde de calcium et de manganèse, l'oxyde de strontium et de manganèse, ou l'oxyde de baryum et de manganèse.

11. Dispositif de contrôle solaire selon la revendication 6 dans lequel ledit matériau conducteur est choisi parmi les semi-conducteurs incluant : l'oxyde d'indium dopé à l'étain, l'oxyde d'étain dopé à l'antimoine, l'oxyde d'étain dopé à l'oxyde d'antimoine, l'hexaborure de lanthane, l'oxyde de zinc dopé à l'aluminium, l'oxyde de zinc dopé à l'indium, l'oxyde de zinc dopé à l'étain, l'oxyde de zinc dopé au silicium, l'oxyde de zinc dopé au fluor, l'oxyde de zinc dopé au gallium, l'oxyde d'étain dopé au fluor, l'oxyde de cadmium et d'étain, l'oxyde de tungstène, un composite d'oxyde de tungstène, l'oxyde de cobalt, l'oxyde de chrome, l'oxyde de fer, l'oxyde de nickel, le nitrure de titane, ou l'hexaborure de cérium ; et de préférence ledit matériau conducteur comprend un mélange d'oxyde d'indium dopé à l'étain, d'oxyde d'étain dopé à l'antimoine et d'hexaborure de lanthane.

**Fig. 1A**

**Fig. 1B**

Fig. 2A

Fig. 2B

Fig. 3A

Fig. 3B

Fig. 4B

Fig. 4A

Fig. 5A

Fig. 5B

Fig. 5C

Fig. 5D

**Fig. 6A**

**Fig. 6B**

EP 3 004 981 B1

Fig. 7A

Fig. 7B

Fig. 8A

Fig. 8B

EP 3 004 981 B1

Fig. 9A

Fig. 9B

**Fig. 10A**

**Fig. 10B**

Fig. 11

**Fig. 12**

Fig. 17

Fig. 13

Fig. 15

Fig. 16

Fig. 14

Fig. 20

Fig. 18

Fig. 19

EP 3 004 981 B1

709

710

711

**Fig. 21**

712

713

714

**Fig. 22**

1676

1675

60

709 710 711 709 710 709 710 11 709 710

712 709 710 709 710 709 10 710 709 714

709 710 711 712 710 709 10 711 709 710

711 710 709 710 709 714 710 709 710 709 710

709 710 709 710 709 710 11 709 710 709

712 710 709 710 709 714 710 709 710 711 709

709 710 709 711 710 709 10 709 710 709

712 710 709 710 709 710 709 710 714 710 709

709 710 711 709 710 709 10 709 710 709

712 710 709 710 709 710 709 710 711 709 714

1070

723

733

294

**Fig. 23**

**REFERENCES CITED IN THE DESCRIPTION**

**Patent documents cited in the description**

- US 20130088768 A1
- US 20130063333 A1
- US 20050213191 A1
- US 20120188295 A1
- US 6416868 B1
- EP 1008564 A1
- EP 3396446 B
- EP 3004505 B
- US 8441714 B
- US 7002728 B
- WO 2010091398 A
- WO 2011154104 A
- US 7417787 B
- US 7951938 B
- US 20110310465 A
- US 20120092753 A
- US 6416868 B
- US 7521006 B
- US 7416601 B
- US 20110064935 A